# EUROPEAN PATENT APPLICATION

(11) **EP 4 657 382 A1**
(43) Date of publication of application: **03.12.2025**
(21) Application number: 24747141.0
(22) Date of filing: 12.01.2024
(51) Int. Cl.: G06T 19/00

(54) **INFORMATION PROCESSING METHOD AND INFORMATION PROCESSING DEVICE**

(30) Priority: 25.01.2023 US 202363440992 P
(71) Applicant: Panasonic Intellectual Property Corporation of America, Torrance, CA 90504 (US)
(72) Inventor: SUGIO, Toshiyasu, Kadoma-shi, Osaka 571-0057 (JP); NISHI, Takahiro, Kadoma-shi, Osaka 571-0057 (JP); IGUCHI, Noritaka, Kadoma-shi, Osaka 571-0057 (JP); TOMA, Tadamasa, Kadoma-shi, Osaka 571-0057 (JP); NONOSHITA, Airi, Kadoma-shi, Osaka 571-0057 (JP)
(74) Representative: Grünecker Patent- und Rechtsanwälte PartG mbB
(86) International application number: PCT/JP2024/000709
(87) International publication number: WO 2024/157810

(57) **Abstract**

An information processing method includes: determining whether a candidate travelable space, which is a candidate space that a user is capable of traveling to in a virtual space, satisfies a condition (S701); and controlling, according to a result of the determining of whether the candidate travelable space satisfies the condition, whether to present the candidate travelable space in the virtual space (S702).

## Description

### [Technical Field]

The present disclosure relates to information processing methods, and so on.

### [Background Art]

A content control device, and so on, that improves the realism of content that enables a user to go through an experience that includes traveling in a virtual space is proposed in Patent Literature (PTL) 1.

### [Citation List]

### [Patent Literature]

[PTL 1] Japanese Unexamined Patent Application Publication No. 2022-177643

### [Summary of Invention]

### [Technical Problem]

However, there are cases where presenting all of various travelable spaces, various three-dimensional objects, and so on, in the virtual space is not necessarily suitable for a usage state, etc. Furthermore, presenting various travelable spaces, various three-dimensional objects, and so on, may cause an increase in processing load.

In view of this, the present disclosure provides an information processing method, and so on, capable of contributing to efficient presenting of a virtual space that is suitable for the usage state, etc.

### [Solution to Problem]

An information processing method according to an aspect of the present disclosure includes: determining whether a candidate travelable space satisfies a condition, the candidate travelable space being a candidate space that a user is capable of traveling to in a virtual space; and controlling, according to a result of the determining of whether the candidate travelable space satisfies the condition, whether to present the candidate travelable space in the virtual space.

It should be noted that these generic and specific aspects may be implemented as a system, a device, a method, an integrated circuit, a computer program, or a non-transitory recording medium such as a computer-readable CD-ROM, or may be implemented as any combination of a system, a device, a method, an integrated circuit, a computer program, and a recording medium.

### [Advantageous Effects of Invention]

An information processing method, and so on, according to an aspect of the present disclosure is capable of contributing to efficient presenting of a virtual space that is suitable for a usage state, etc.

### [Brief Description of Drawings]

[FIG. 1]

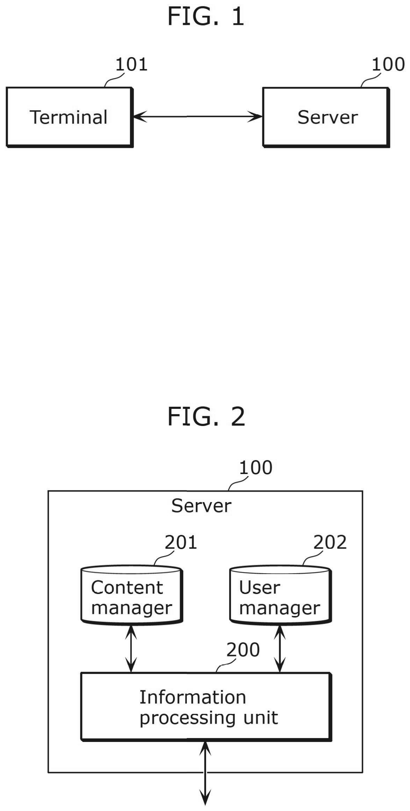

   FIG. 1 is a block diagram illustrating a configuration example of a virtual space system according to an embodiment.
[FIG. 2]
   FIG. 2 is a block diagram illustrating a first configuration example of a server according to the embodiment.
[FIG. 3]

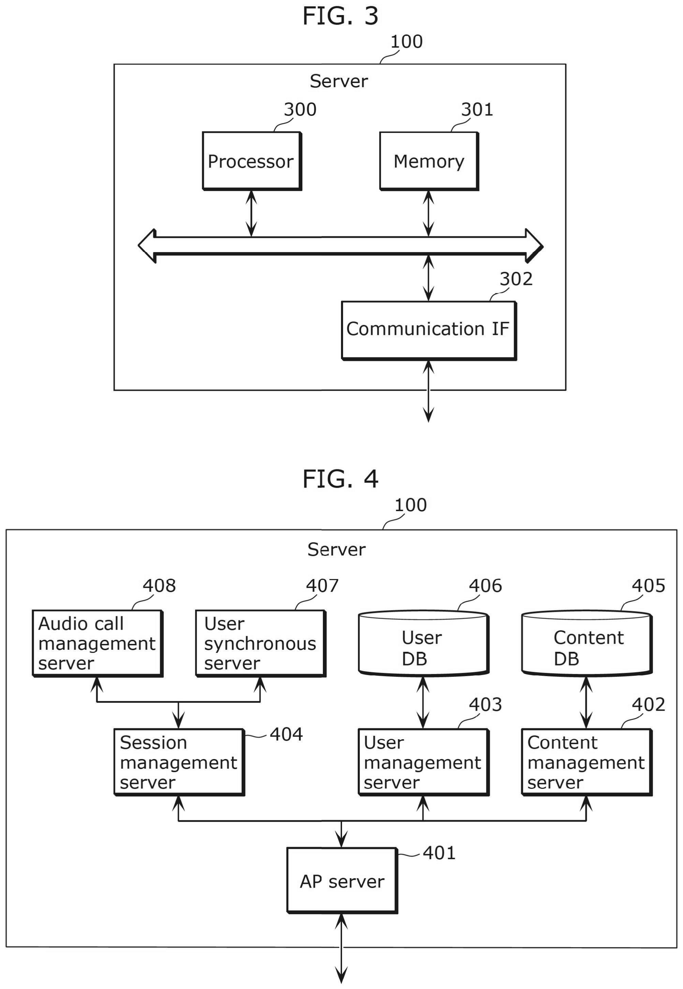

   FIG. 3 is a block diagram illustrating a second configuration example of the server according to the embodiment.
[FIG. 4]
   FIG. 4 is a block diagram illustrating a third configuration example of the server according to the embodiment.
[FIG. 5]

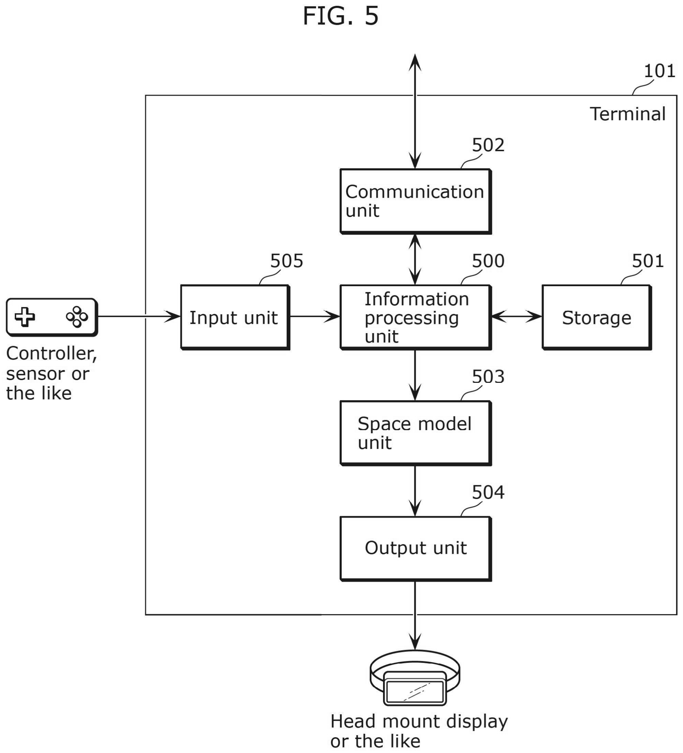

   FIG. 5 is a block diagram illustrating a first configuration example of a terminal according to the embodiment.
[FIG. 6]

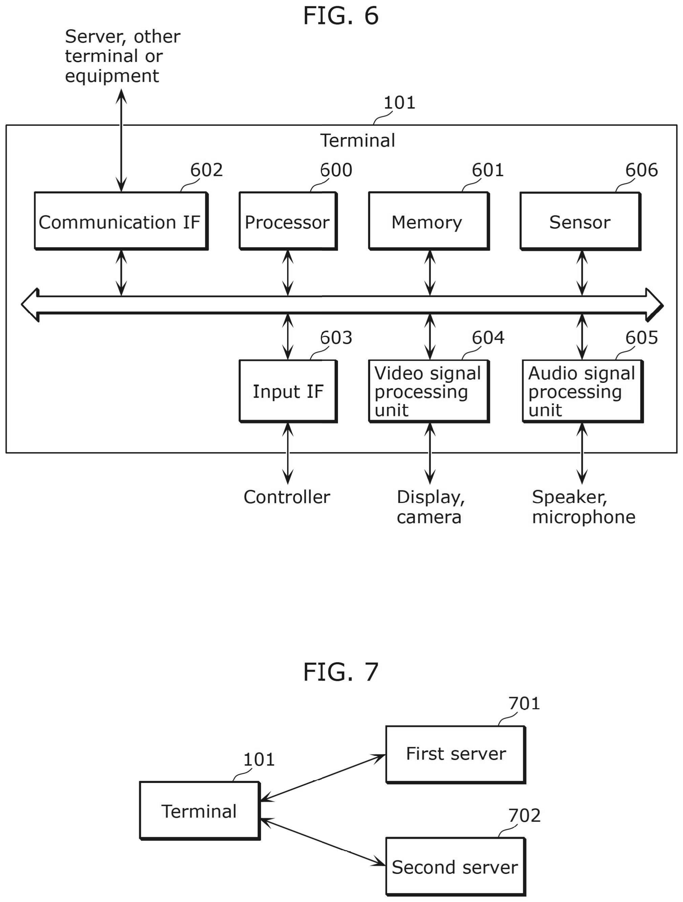

   FIG. 6 is a block diagram illustrating a second configuration example of the terminal according to the embodiment.
[FIG. 7]
   FIG. 7 is a block diagram illustrating a configuration example of a virtual space coordination system according to the embodiment.
[FIG. 8]

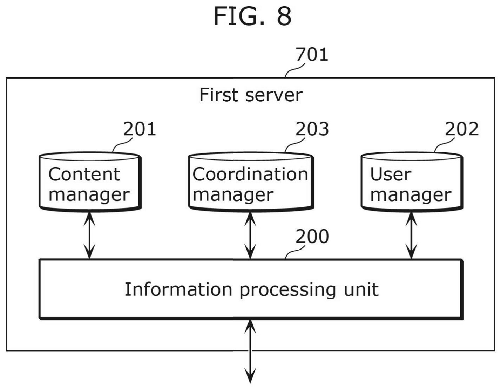

   FIG. 8 is a block diagram illustrating a configuration example of a first server according to the embodiment.
[FIG. 9]

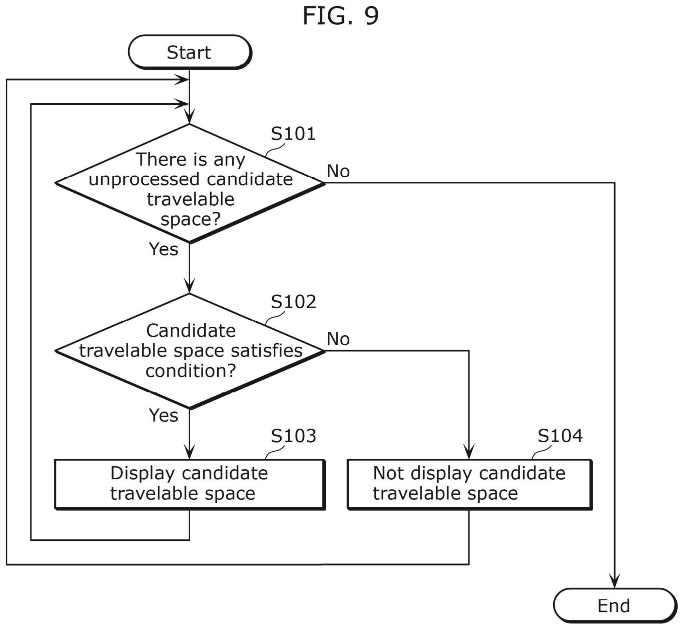

   FIG. 9 is a flowchart illustrating an example of display control processing for candidate travelable spaces according to the embodiment.
[FIG. 10]

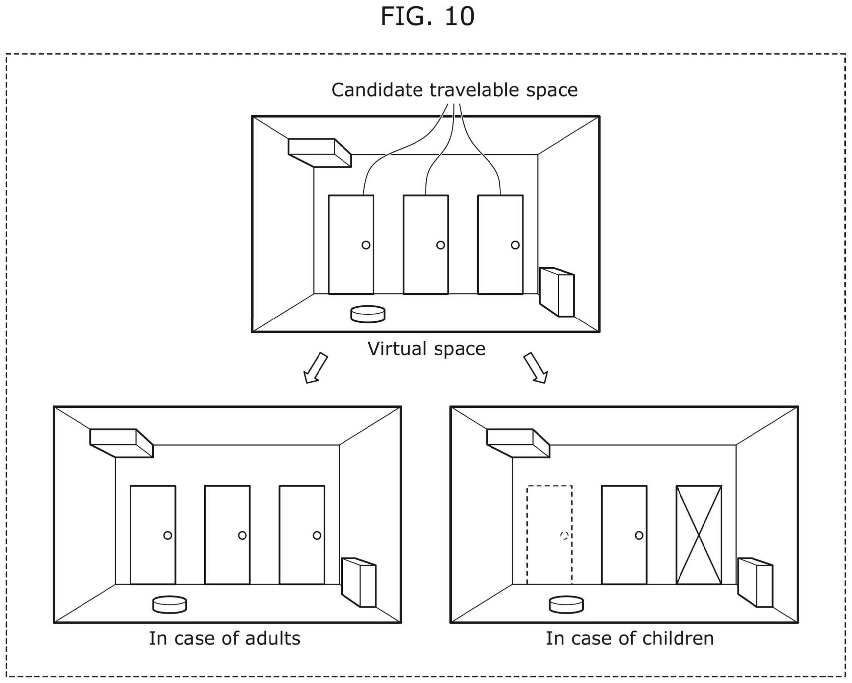

   FIG. 10 is a conceptual diagram illustrating an example display of candidate travelable spaces according to the embodiment.
[FIG. 11]

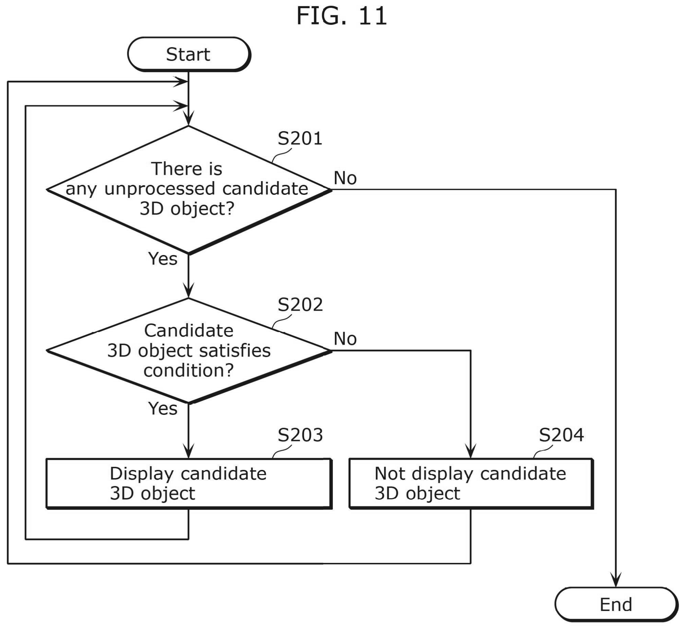

   FIG. 11 is a flowchart illustrating an example of display control processing for candidate 3D objects according to the embodiment.
[FIG. 12]

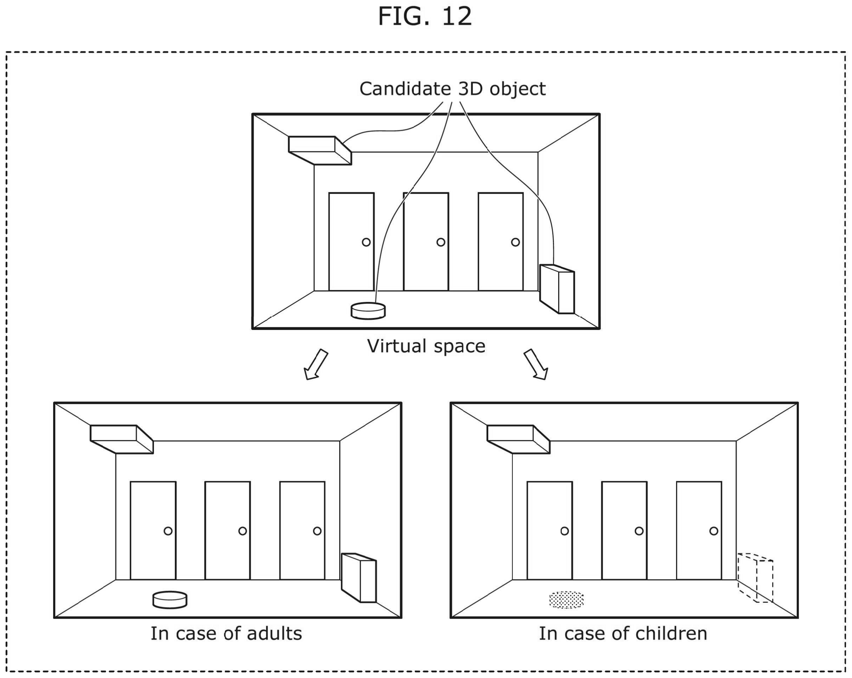

   FIG. 12 is a conceptual diagram illustrating an example display of candidate 3D objects according to the embodiment.
[FIG. 13]

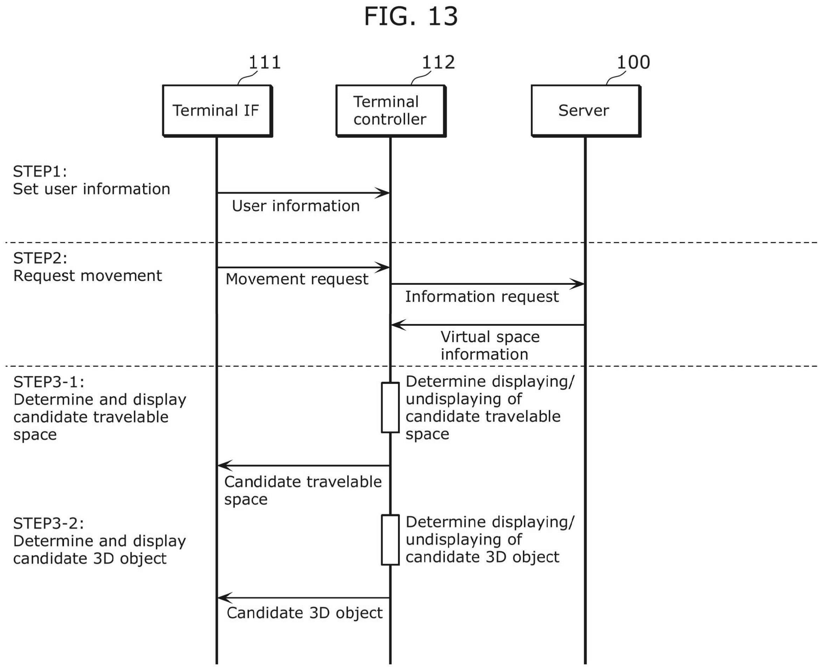

   FIG. 13 is a sequence diagram illustrating an example operation when the terminal according to the embodiment performs display control processing.
[FIG. 14]

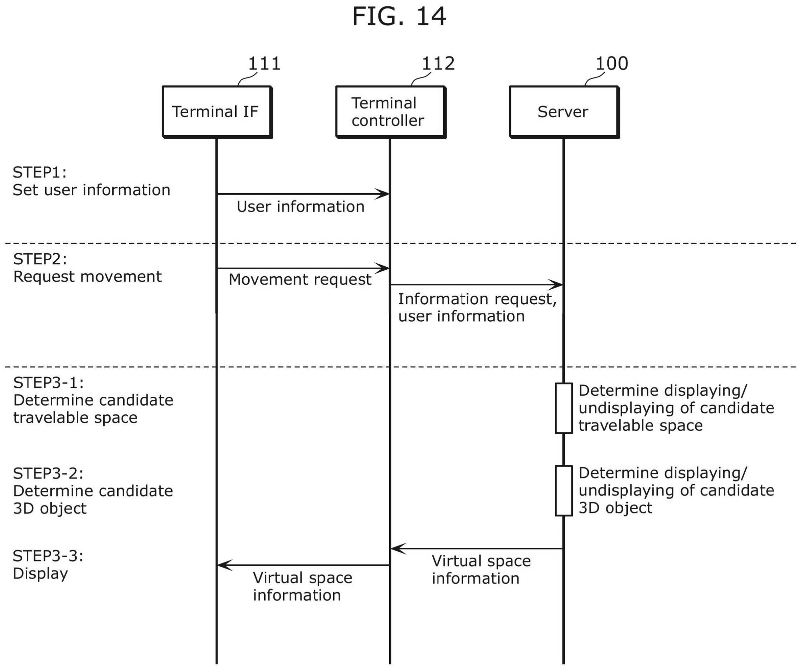

   FIG. 14 is a sequence diagram illustrating an example operation when the server according to the embodiment performs display control processing.
[FIG. 15]

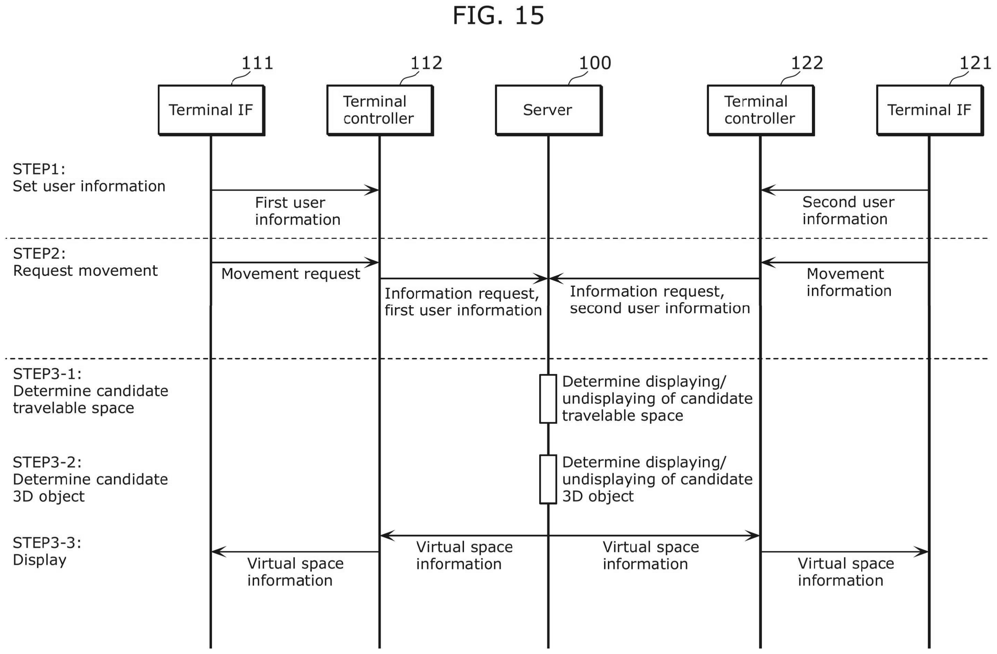

   FIG. 15 is a sequence diagram illustrating an example operation when the server according to the embodiment performs display control processing with respect to a plurality of users.
[FIG. 16]

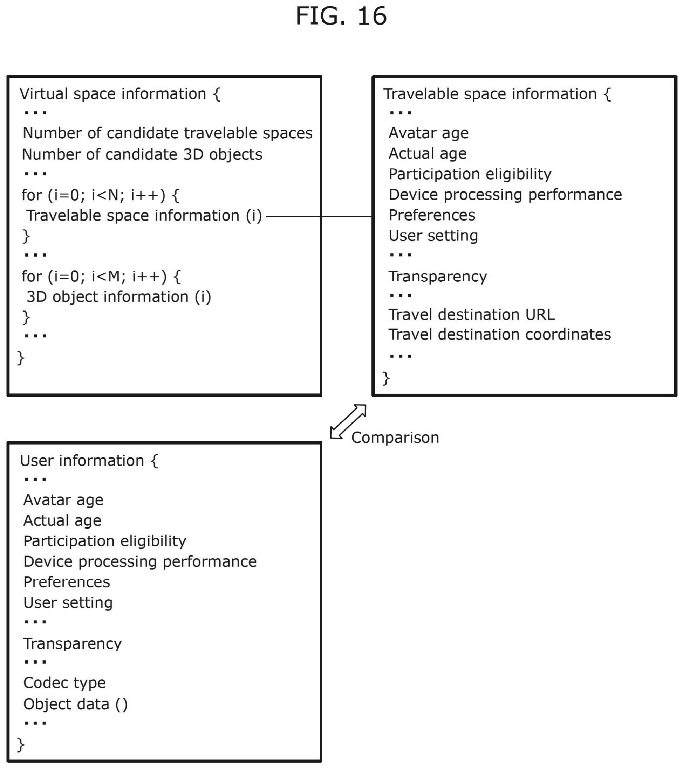

   FIG. 16 is a syntax diagram illustrating an example of syntax elements related to display control processing for a candidate travelable space according to the embodiment.
[FIG. 17]

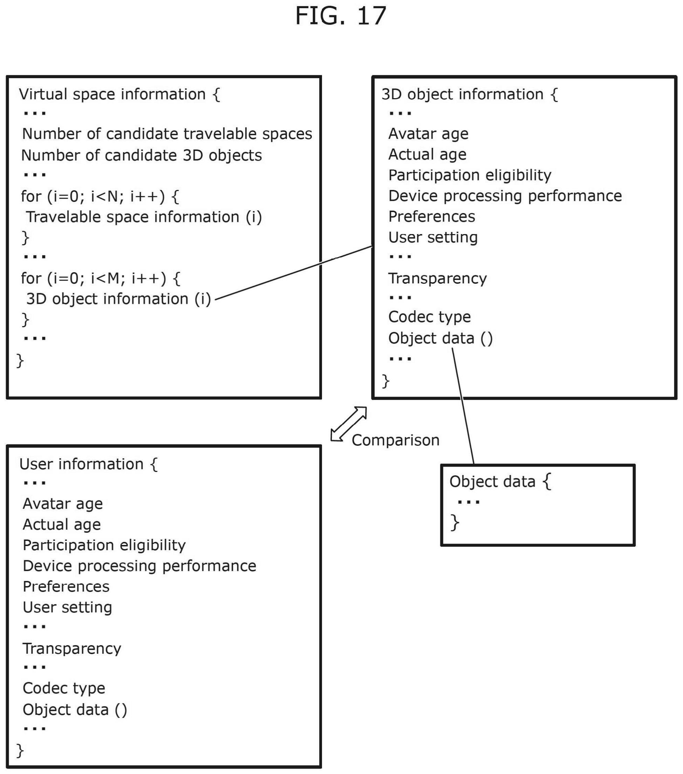

   FIG. 17 is a syntax diagram illustrating an example of syntax elements related to display control processing for a candidate 3D object according to the embodiment.
[FIG. 18]

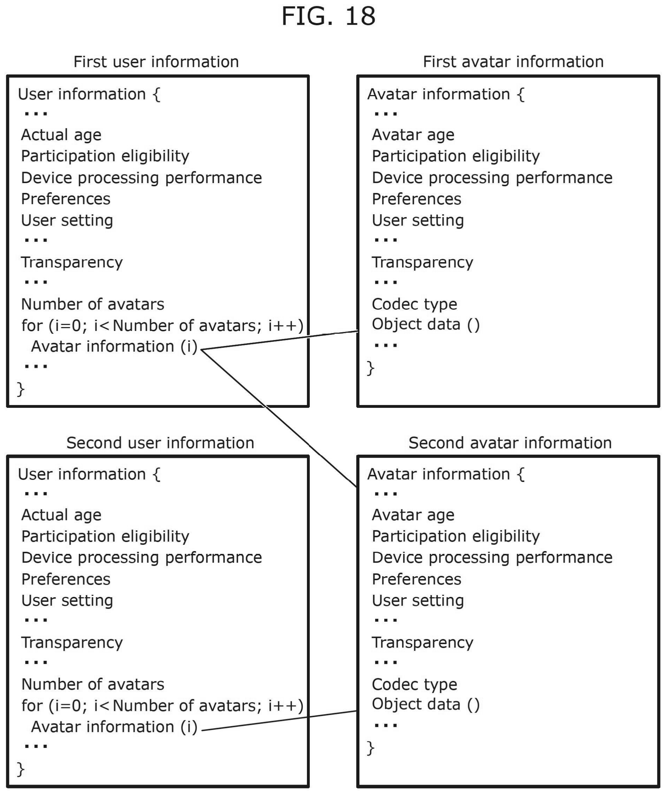

   FIG. 18 is a syntax diagram illustrating an example of syntax elements related to users and avatars according to the embodiment.
[FIG. 19]

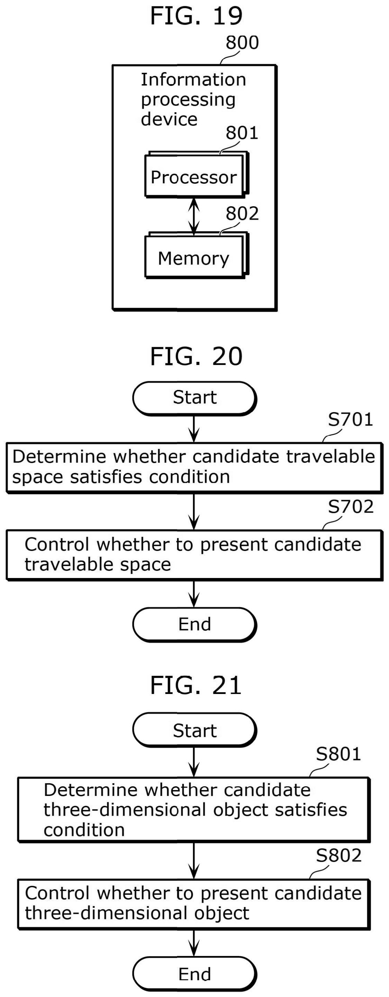

   FIG. 19 is a block diagram illustrating a configuration example of an information processing device according to the embodiment.
[FIG. 20]
   FIG. 20 is a flowchart illustrating a first operation example of the information processing device according to the embodiment.
[FIG. 21]
   FIG. 21 is a flowchart illustrating a second operation example of the information processing device according to the embodiment.

### [Description of Embodiments]

### [Introduction]

In recent years, services via a virtual space provided by computer simulation are attracting attention. The virtual space is represented by three-dimensional shape data that indicates a three-dimensional shape of an object, such as a topography in the space or a building placed in the space.

In the virtual space, for example, a user can manipulate an avatar, which is a representation of the user in the virtual space, to search the space, participate in an arbitrary activity, or communicate with another user. Furthermore, the virtual space can be used for simulation of a physical phenomenon that virtually occurs in the virtual space or for control of an appliance or electronic device placed in the real space based on the simulation, for example.

For example, a content control device, and so on, that improves the realism of content that enables a user to go through an experience that includes traveling in a virtual space is proposed in Patent Literature 1.

However, there are cases where presenting all of various travelable spaces, various three-dimensional objects, and so on, in the virtual space is not necessarily suitable for a usage state, etc. For example, presenting a travelable space or a three-dimensional object, or the like, that is not suitable for the usage state, etc., may lead to the degradation of realism. Furthermore, presenting various travelable spaces, various three-dimensional objects, and so on, may cause an increase in processing load.

In view of this, an information processing method according to a first example includes: determining whether a candidate travelable space, which is a candidate space that a user can travel to in a virtual space, satisfies a condition; and controlling, according to a result of the determining of whether the candidate travelable space satisfies the condition, whether to present the candidate travelable space in the virtual space.

Accordingly, there are cases where a candidate travelable space that satisfies the condition can be presented in the virtual space without presenting a candidate travelable space that does not satisfy the condition. In other words, there are cases where a virtual space that is suitable for the condition can be provided. Furthermore, there are cases where the candidate travelable space to be presented can be limited according to the condition. Therefore, there are cases where the number of candidate travelable spaces to be presented can be reduced, and thus candidate travelable spaces can be presented efficiently.

Furthermore, an information processing method according to a second example is the information processing method according to the first example in which, whether the candidate travelable space satisfies the condition may be determined using a virtual attribute of the user in the virtual space.

Accordingly, there are cases where a candidate travelable space that is suitable for the virtual attribute of the user can be presented without presenting a candidate travelable space that is not suitable for the virtual attribute of the user. Therefore, there are cases where a virtual space that is suitable for the virtual attribute of the user can be provided.

Furthermore, an information processing method according to a third example is the information processing method according to the second example in which, the virtual attribute of the user may be a virtual age of the user.

Accordingly, there are cases where a candidate travelable space that is suitable for the virtual age of the user can be presented without presenting a candidate travelable space that is not suitable for the virtual age of the user. Therefore, there are cases where a virtual space that is suitable for the virtual age of the user can be provided.

Furthermore, an information processing method according to a fourth example is the information processing method according to any one of the first to third examples in which, whether the candidate travelable space satisfies the condition may be determined using a real attribute of the user in a real world.

Accordingly, there are cases where a candidate travelable space that is suitable for the real attribute of the user can be presented without presenting a candidate travelable space that is not suitable for the real attribute of the user. Therefore, there are cases where a virtual space that is suitable for the real attribute of the user can be provided.

Furthermore, an information processing method according to a fifth example is the information processing method according to the fourth example in which, the real attribute of the user may be a real age of the user.

Accordingly, there are cases where a candidate travelable space that is suitable for the real age of the user can be presented without presenting a candidate travelable space that is not suitable for the real age of the user. Therefore, there are cases where a virtual space that is suitable for the real age of the user can be provided.

Furthermore, an information processing method according to a sixth example is the information processing method according to the first example in which, one attribute may be selected from either a virtual attribute of the user in the virtual space or a real attribute of the user in a real world, and whether the candidate travelable space satisfies the condition may be determined using the one attribute selected.

Accordingly, there are cases where whether the condition is satisfied is determined by switching between a virtual attribute of the user and a real attribute of the user according to a usage state, and so on, and thus a candidate travelable space that is suitable for the condition can be provided. Therefore, there are cases where it is possible to switch between a virtual space that is suitable for the virtual attribute of the user and a virtual space that is suitable for the real attribute of the user, according to the usage state, and so on.

Furthermore, an information processing method according to a seventh example is the information processing method according to any one of the first to sixth examples in which, whether the candidate travelable space satisfies the condition may be determined and whether to present the candidate travelable space may be controlled per multi-user unit consisting of a plurality of users including the user.

Accordingly, there are cases where whether to present a candidate travelable space can be switched per multi-user unit consisting of a plurality of users. Therefore, there are cases where a common candidate travelable space can be provided to a plurality of users.

Furthermore, an information processing method according to an eighth example is the information processing method according to any one of the first to seventh examples in which, candidate travelable space information to which condition information has been added may be obtained, the candidate travelable space information indicating the candidate travelable space, the condition information indicating the condition, and whether the candidate travelable space satisfies the condition may be determined according to the condition information added to the candidate travelable space information.

Accordingly, there are cases where it is possible to efficiently determine whether a candidate travelable space satisfies the condition, and efficiently present the candidate travelable space.

Furthermore, an information processing method according to a ninth example includes: determining whether a candidate three-dimensional object, which is a candidate three-dimensional object to be presented to a user in a virtual space, satisfies a condition; and controlling, according to a result of the determining of whether the candidate three-dimensional object satisfies the condition, whether to present the candidate three-dimensional object in the virtual space.

Accordingly, there are cases where a candidate three-dimensional object that satisfies the condition can be presented in the virtual space without presenting a candidate three-dimensional object that does not satisfy the condition. In other words, there are cases where a virtual space that is suitable for the condition can be provided. Furthermore, there are cases where the candidate three-dimensional object to be presented can be limited according to the condition. Therefore, there are cases where the number of candidate three-dimensional objects to be presented can be reduced, and thus candidate three-dimensional objects can be presented efficiently.

Furthermore, an information processing method according to a tenth example is the information processing method according to the ninth example in which, whether the candidate three-dimensional object satisfies the condition may be determined using a virtual attribute of the user in the virtual space.

Accordingly, there are cases where a candidate three-dimensional object that is suitable for the virtual attribute of the user can be presented without presenting a candidate three-dimensional object that is not suitable for the virtual attribute of the user. Therefore, there are cases where a virtual space that is suitable for the virtual attribute of the user can be provided.

Furthermore, an information processing method according to an eleventh example is the information processing method according to the tenth example in which, the virtual attribute of the user may be a virtual age of the user.

Accordingly, there are cases where a candidate three-dimensional object that is suitable for the virtual age of the user can be presented without presenting a candidate three-dimensional object that is not suitable for the virtual age of the user. Therefore, there are cases where a virtual space that is suitable for the virtual age of the user can be provided.

Furthermore, an information processing method according to a twelfth example is the information processing method according to any one of the ninth to eleventh examples in which, whether the candidate three-dimensional object satisfies the condition may be determined using a real attribute of the user in a real world.

Accordingly, there are cases where a candidate three-dimensional object that is suitable for the real attribute of the user can be presented without presenting a candidate three-dimensional object that is not suitable for the real attribute of the user. Therefore, there are cases where a virtual space that is suitable for the real attribute of the user can be provided.

Furthermore, an information processing method according to a thirteenth example is the information processing method according to the twelfth example in which, the real attribute of the user may be a real age of the user.

Accordingly, there are cases where a candidate three-dimensional object that is suitable for the real age of the user can be presented without presenting a candidate three-dimensional object that is not suitable for the real age of the user. Therefore, there are cases where a virtual space that is suitable for the real age of the user can be provided.

Furthermore, an information processing method according to a fourteenth example is the information processing method according to any one of the ninth to thirteenth examples in which, one attribute may be selected from either a virtual attribute of the user in the virtual space or a real attribute of the user in a real world, and whether the candidate three-dimensional object satisfies the condition may be determined using the one attribute selected.

Accordingly, there are cases where whether the condition is satisfied is determined by switching between a virtual attribute of the user and a real attribute of the user according to a usage state, and so on, and thus a candidate travelable space that is suitable for the condition can be provided. Therefore, are cases where it is possible to switch between a virtual space that is suitable for the virtual attribute of the user and a virtual space that is suitable for the real attribute of the user, according to the usage state, and so on.

Furthermore, an information processing method according to a fifteenth example is the information processing method according to any one of the ninth to fourteenth examples in which, whether the candidate three-dimensional object satisfies the condition may be determined and whether to present the candidate three-dimensional object may be controlled per multi-user unit consisting of a plurality of users including the user.

Accordingly, there are cases where whether to present a candidate three-dimensional object can be switched per multi-user unit consisting of a plurality of users. Therefore, there are cases where a common candidate travelable space can be provided to a plurality of users.

Furthermore, an information processing method according to a sixteenth example is the information processing method according to any one of the ninth to fifteenth examples in which, one unit may be selected from either a single-user unit consisting of the user or a multi-user unit consisting of a plurality of users including the user, and whether the candidate three-dimensional object satisfies the condition may be determined and whether to present the candidate three-dimensional object may be controlled per the one unit selected.

Accordingly, there are cases where it is possible to determine whether the candidate three-dimensional object satisfies the condition and control whether to present the candidate three-dimensional object by switching between a single-user unit consisting of the user and a multiple-user unit consisting of a plurality of users, according to the usage state, and so on. Therefore, there are cases where it is possible to switch between providing a virtual space individually to a user and providing a common virtual space to a plurality of users.

Furthermore, an information processing method according to a seventeenth example is the information processing method according to any one of the ninth to sixteenth examples in which, candidate three-dimensional object information to which condition information has been added may be obtained, the candidate three-dimensional object information indicating the candidate three-dimensional object, the condition information indicating the condition, and whether the candidate three-dimensional object satisfies the condition may be determined according to the condition information added to the candidate three-dimensional object information.

Accordingly, there are cases where it is possible to efficiently determine whether a candidate three-dimensional object satisfies the condition, and efficiently present the candidate three-dimensional object.

Furthermore, an information processing method according to an eighteenth example is the information processing method according to any one of the ninth to seventeenth examples in which, whether to present the candidate three-dimensional object in the virtual space in a first mode may be controlled according to the result of the determining. Here, the candidate three-dimensional object may be presented in the virtual space in the first mode, when the candidate three-dimensional object is determined to satisfy the condition, and the candidate three-dimensional object may be presented in the virtual space in a second mode different from the first mode, without presenting the candidate three-dimensional object in the virtual space in the first mode, when the candidate three-dimensional object is determined not to satisfy the condition.

Accordingly, there are cases where, in the virtual space, a candidate three-dimensional object that satisfies the condition can be presented in the first mode, and a candidate three-dimensional object that does not satisfy the condition can be presented in the second mode. Therefore, there are cases where a virtual space that is suitable for the condition can be provided.

Furthermore, an information processing device according to a nineteenth example includes: one or more processors; and one or more memories that are accessible from the one or more processors, in which, in operation, the one or more processors: determine whether a candidate travelable space satisfies a condition, the candidate travelable space being a candidate space that a user is capable of traveling to in a virtual space; and control, according to a result of the determining of whether the candidate travelable space satisfies the condition, whether to present the candidate travelable space in the virtual space.

Accordingly, there are cases where a candidate travelable space that satisfies the condition can be presented in the virtual space without presenting a candidate travelable space that does not satisfy the condition. In other words, there are cases where a virtual space that is suitable for the condition can be provided. Furthermore, there are cases where the candidate travelable space to be presented can be limited according to the condition. Therefore, there are cases where the number of candidate travelable spaces to be presented can be reduced, and thus candidate travelable spaces can be presented efficiently.

Furthermore, an information processing device according to a twentieth example includes: one or more processors; and one or more memories that are accessible from the one or more processors, in which, in operation, the one or more processors: determine whether a candidate three-dimensional object satisfies a condition, the candidate three-dimensional object being a candidate three-dimensional object to be presented to a user in a virtual space; and control, according to a result of the determining of whether the candidate three-dimensional object satisfies the condition, whether to present the candidate three-dimensional object in the virtual space.

Accordingly, there are cases where a candidate three-dimensional object that satisfies the condition can be presented in the virtual space without presenting a candidate three-dimensional object that does not satisfy the condition. In other words, there are cases where a virtual space that is suitable for the condition can be provided. Furthermore, there are cases where the candidate three-dimensional object to be presented can be limited according to the condition. Therefore, there are cases where the number of candidate three-dimensional objects to be presented can be reduced, and thus candidate three-dimensional objects can be presented efficiently.

In addition, these generic or specific aspects may be implemented as a system, a device, a method, an integrated circuit, a computer program, or a non-transitory recording medium such as a CD-ROM, or may be implemented as any combination of a system, a device, a method, an integrated circuit, a computer program, and a recording medium.

### [Embodiment]

Hereinafter, embodiments will be described in detail with reference to the drawings. It should be noted that the same or corresponding components in different figures are given the same reference signs, and overlapping description may be omitted.

Furthermore, each of the aspects described below are generic or specific examples. Numerical values, shapes, components, steps, the processing order of the steps, and so on, indicated in the subsequent aspects are mere examples, and thus are not intended to limit the claims. Furthermore, components that are not described in any aspect indicating the broadest concepts among the aspects are described as optional components. Moreover, the aspects may be combined.

Furthermore, in the subsequent description, information and data may be used interchangeably. Moreover, in the subsequent description, operations performed by a system or a device may be performed by any component included in the system or device.

### [System Configuration Example]

FIG. 1 is a block diagram illustrating a configuration example of a virtual space system according to this embodiment. The virtual space system in FIG. 1 includes server 100 and terminal 101 and provides a virtual space. The virtual space system may be expressed as a virtual space providing system. In the virtual space, a display format, an encoding scheme, a data format and the like are specified. Server 100 and terminal 101 communicate with each other. Although FIG. 1 illustrates only one terminal 101, a plurality of terminals 101 may communicate with server 100. That is, a plurality of users may participate in the virtual space via a plurality of terminals 101 at the same time.

Server 100 is a server device that retains data on the virtual space (virtual space information) and transmits data on the virtual space to terminal 101 in response to a request from terminal 101. Furthermore, server 100 retains user data (user information) on a user using terminal 101 and other users and transmits user data on other users to terminal 101. Server 100 may transmit, to terminal 101, user data on the user using terminal 101 in addition to the user data on other users.

The user data is data associated with a user and includes image data or three-dimensional model data on an avatar representing the user in the virtual space, for example. Furthermore, the user data may include data on an item possessed by the user in the virtual space, attribute data indicating an attribute of the user, and data concerning an action history of the user. Furthermore, the user data may include data indicating a parameter, such as the level, strength, or skill of a character object manipulated by the user in the virtual space of a game.

Note that the avatar representing the user in the virtual space and a character object manipulated by the user in the virtual space can be regarded as examples of items possessed by the user in the virtual space. Furthermore, the avatar representing the user in the virtual space and a character object manipulated by the user in the virtual space may be expressed as the user in the virtual space. Furthermore, when a user identifier (ID) is used to identify a user, the data associated with the user may be data associated with the user ID.

The user data may include not only information used in the virtual space but also personal information that allows identification of the user. However, when the user data includes personal information in addition to the data used in the virtual space, information that is shared with other users and information that is not shared with other users may be separately managed in order that the personal information is not accessed by the other users. Furthermore, the information that is shared with other users may be able to be set by each user.

The user data may directly include a value, a text or other data concerning the user. Furthermore, the user data may include a parameter, an index or the like for identifying data concerning the user. Data concerning the user may be obtained by referring to a preset table or a table externally obtained from another server or the like based on the parameter, index or the like.

For example, the user data may include a storage location of data, such as an address on another server, and may indirectly indicate data via the storage location. In that case, server 100 or terminal 101 obtains a value, a text or other data concerning the user from the storage location specified by the address.

The address is described by a uniform resource identifier (URI), such as uniform resource locator (URL) or uniform resource name (URN). In addition to the address, the user data may include information that indicates the type, format or the like of data obtained from the address. Note that the user data will be described in detail with reference to FIG. 8.

Terminal 101 is a terminal device that receives data on the virtual space (virtual space information) from server 100. Based on the data on the virtual space received from server 100, terminal 101 displays an image of the virtual space on a display device of terminal 101 or a display device connected to terminal 101. Furthermore, terminal 101 obtains input data that corresponds to an input operation from the user and transmits the input data to server 100.

For example, the input data corresponds to movement information on the avatar in the virtual space. Server 100 notifies, of the input data, terminal 101 of each user. Terminal 101 of each user moves the avatar in the virtual space based on a 3D model downloaded in advance and the input data of which terminal 101 is notified by server 100.

Note that server 100 may determine, based on the input data, whether or not the avatar placed in the virtual space has made an action, such as a movement or gesture, and may notify terminal 101 of each user of the determination result about the action, rather than notifying terminal 101 of the input data. In this way, server 100 may move the avatar in the virtual space displayed on terminal 101 of each user. Furthermore, the input data may include text data, audio data, or video data used for communication with other users.

FIG. 2 is a block diagram illustrating a first configuration example of server 100. Server 100 includes information processing unit 200, content manager 201, and user manager 202.

Information processing unit 200 communicates with terminal 101. For example, information processing unit 200 obtains data requested by terminal 101 from content manager 201 or user manager 202, and transmits the data to terminal 101. Furthermore, information processing unit 200 may perform processing requested by terminal 101 on the data received from terminal 101 and transmit the processing result to terminal 101 or store the processing result in content manager 201 or user manager 202.

Furthermore, information processing unit 200 may perform processing requested by terminal 101 on the data obtained from content manager 201 and user manager 202. Information processing unit 200 may then transmit the processing result to terminal 101 or store the processing result in content manager 201 or user manager 202.

Content manager 201 manages content data, which is data concerning a content forming a virtual space. User manager 202 manages user data, which is data concerning a user. The content data and the user data will be described in detail later.

FIG. 3 is a block diagram illustrating a second configuration example of server 100. A plurality of components of server 100 illustrated in FIG. 2 may be implemented by a plurality of components of server 100 illustrated in FIG. 3. In the example in FIG. 3, server 100 includes processor 300, memory 301, and communication interface (IF) 302.

Processor 300 is formed by a central processing unit (CPU), for example. Processor 300 may be formed by a plurality of CPUs or may include a circuit dedicated for particular processing, such as image processing or AI processing, such as a graphics processing unit (GPU).

Memory 301 is formed by a random access memory (RAM) and a read only memory (ROM), for example. Memory 301 may include a magnetic storage medium, such as a hard disk, or a semiconductor memory, such as a solid state drive (SSD). Furthermore, memory 301 may be an internal memory incorporated in a CPU or GPU.

Communication IF 302 is formed by a circuit that provides communication that corresponds to cellular communication, wireless LAN, wired LAN, near-field radio communication or the like, for example. Here, the cellular communication corresponds to long term evolution (LTE (registered trademark)), for example. The wireless LAN corresponds to WiFi (registered trademark) (IEEE 802.11 and revised standards thereof), for example. The wired LAN corresponds to Ethernet (registered trademark), for example. The near field radio communication corresponds to Bluetooth (registered trademark), for example.

Furthermore, communication IF 302 may include an antenna for wireless communication or a terminal to be connected to a cable for wired communication.

Using memory 301, processor 300 of server 100 executes a program stored in memory 301 and performs processing concerning provision of a virtual space.

Communication IF 302 performs wireless communication or wired communication. Specifically, communication IF 302 communicates with terminal 101 over an arbitrary network, such as the Internet or a content distribution network (CDN). Although the Internet and CDN are listed as examples of the network here, other networks may also be used.

For example, when the virtual space is provided in the communication range of a particular access point (AP) or base station that provides wireless communication, the network that connects server 100 and terminal 101 may be only the direct wireless communication with the AP or base station. In that case, server 100 may be included in the AP or base station or may be disposed together with the AP or base station and connected to the AP or base station over wired or wireless communication.

Furthermore, communication IF 302 may use the hypertext transfer protocol (HTTP) to achieve data transmission and reception between server 100 (content providing device) and terminal 101 (content reproducing device), which corresponds to a client. Although the HTTP is listed as a protocol used for communication here, other communication protocols may also be used.

For example, data transmission and reception may be achieved by using the file transfer protocol (FTP), the real-time transport protocol (RTP) or the like.

FIG. 4 is a block diagram illustrating a third configuration example of server 100. Server 100 illustrated in FIG. 2 may be formed by a plurality of servers illustrated in FIG. 4 that operate in coordination with each other.

Specifically, in FIG. 4, server 100 includes application server (AP server) 401, content management server 402, user management server 403, session management server 404, content database (content DB) 405, user database (user DB) 406, user synchronization server 407, and audio call management server 408.

The set of servers illustrated in FIG. 4 is just an example, and each server may have different role or name. For example, one server in FIG. 4 may be formed by a plurality of servers, or a plurality of servers in FIG. 4 may form one server. Furthermore, processing performed by any of the servers in the present disclosure may be performed by another server, instead of the server.

AP server 401 transmits data requested by terminal 101 to terminal 101. Furthermore, AP server 401 may perform processing requested by terminal 101 and transmit the processing result to terminal 101.

Content management server 402 is a server that manages content data concerning a content forming the virtual space. Content DB 405 is a database that stores content data.

Content management server 402 obtains content data from content DB 405 in response to a request notified from terminal 101 via AP server 401, and transmits the content data to terminal 101 via AP server 401. Furthermore, content management server 402 updates content data stored in content DB 405 in response to a request notified from terminal 101 via AP server 401.

Note that in the above description, content management server 402 receives a request notified from terminal 101 via AP server 401. However, content management server 402 may receive a request made by AP server 401. More specifically, content management server 402 may receive a request made by AP server 401 that processes a request notified from terminal 101.

Furthermore, content management server 402 may store, in content DB 405, address information indicating a storage location of content data, rather than storing a part or the whole of content data itself in content DB 405.

User management server 403 is a server that manages user data concerning a user who participate in the virtual space. User DB 406 is a database that stores user data.

User management server 403 obtains user data from user DB 406 in response to a request notified from terminal 101 via AP server 401, and transmits the user data to terminal 101 via AP server 401. Furthermore, user management server 403 updates user data stored in user DB 406 in response to a request notified from terminal 101 via AP server 401.

Note that in the above description, user management server 403 receives a request notified from terminal 101 via AP server 401. However, user management server 403 may receive a request made by AP server 401. More specifically, user management server 403 may receive a request made by AP server 401 that processes a request notified from terminal 101.

Furthermore, user management server 403 may store, in user DB 406, address information indicating a storage location of user data, rather than storing a part or the whole of user data itself in user DB 406.

Session management server 404 manages a session between terminal 101, which corresponds to a client, and server 100. When a plurality of users access the virtual space at the same time, session management server 404 determines from which client, that is, terminal 101 a request has been transmitted, and manages the state of the client. This allows AP server 401 to respond to a request transmitted from the client, that is, terminal 101 in accordance with the state of the client.

When a plurality of users access the virtual space at the same time, user synchronization server 407 maintains the synchronization between the users by managing information concerning an action of each user that has an effect on the position, movement direction, or the like, of the avatar of the user. User synchronization server 407 may achieve the synchronization in units of frames or in units of groups of a plurality of frames.

That is, user synchronization server 407 transmits information on an action of a user to be displayed or more specifically information on an action of a user whose corresponding avatar is located in a display area to terminal 101 and shares the information with terminal 101, thereby reducing discrepancies between actions of users.

When an audio call is established between a plurality of users, audio call management server 408 manages transmission and reception of audio data between the plurality of terminals 101.

Note that the communication between users is not limited to the audio call, and a video call may be used for communication between users. In that case, video data as well as audio data is transmitted and received. Thus, in addition to audio call management server 408, a video call management server that manages a video call may be provided. Alternatively, instead of audio call management server 408, one call management server that manages both an audio call and a video call may be provided.

Furthermore, the communication between users is not limited to a real-time call but may be performed by using an audio file or video file created in advance.

Furthermore, each of the plurality of servers that operates in coordination may have the configuration illustrated in FIG. 3. In that case, for example, communication IF 302 of AP server 401 directly communicates with terminal 101 and communicates with communication IF 302 of each of the other servers, such as content management server 402, user management server 403, and session management server 404.

Although configuration examples of server 100 have been described above with reference to FIGS. 2 to 4, the above description does not mean that all components or all processing mentioned in the above description are not essential for implementing each aspect of the present disclosure.

FIG. 5 is a block diagram illustrating a first configuration example of terminal 101. In the example in FIG. 5, terminal 101 includes information processing unit 500, storage 501, communication unit 502, space modeling unit 503, output unit 504, and input unit 505.

Information processing unit 500 executes application software corresponding to the virtual space provided by server 100 to control storage 501, communication unit 502, space modeling unit 503, output unit 504, and input unit 505.

Storage 501 stores a program of software that is executed by information processing unit 500, data received from server 100, data of a calculation result from information processing unit 500, and input data obtained via input unit 505, for example.

Communication unit 502 communicates with server 100. Space modeling unit 503 performs generation of an image to be displayed as a two-dimensional or three-dimensional virtual space and a sound that is heard in the virtual space based on content data, which is data concerning the virtual space.

Output unit 504 outputs an image and a sound generated by space modeling unit 503 to a display device or a sound output device, thereby presenting the image and the sound via the display device and the sound output device. The display device and the sound output device may be included in terminal 101 or may be connected to terminal 101 by wired or wireless communication. The display device may be a stationary or portable display, a head mount display, or an AR glass. The sound output device may be a speaker, a headphone, or an earphone.

Information processing unit 500 requests server 100 for content data, which is data concerning the virtual space, via communication unit 502 and obtains the content data from server 100. Furthermore, information processing unit 500 transmits input data obtained via input unit 505 to server 100 via communication unit 502. In this process, information processing unit 500 may directly transmit the input data obtained via input unit 505 to server 100, or may perform signal processing on the input data obtained via input unit 505 and transmit the result to server 100.

The processing performed on the input data obtained via input unit 505 may be processing of converting input data that is operation information input via a controller or the like by the user into a command that can be implemented in the virtual space, for example.

The processing performed on the input data may be image processing, such as recognition processing, performed on input data that is image data obtained from a camera. Furthermore, the processing performed on the input data may be processing of performing image processing to generate information indicating a posture or movement of a person in the image or information indicating that a person in the image has made a predetermined gesture.

FIG. 6 is a block diagram illustrating a second configuration example of terminal 101. A plurality of components illustrated in FIG. 5 may be implemented by a plurality of components illustrated in FIG. 6. In FIG. 6, terminal 101 includes processor 600, memory 601, communication IF 602, input IF 603, video signal processing unit 604, audio signal processing unit 605, and sensor 606.

Processor 600 is formed by a central processing unit (CPU), for example. Processor 600 may be formed by a plurality of CPUs or may include a circuit dedicated for particular processing, such as image processing or AI processing, such as a graphics processing unit (GPU).

Memory 601 is formed by a random access memory (RAM) and a read only memory (ROM), for example. Memory 601 may include a magnetic storage medium, such as a hard disk, or a semiconductor memory, such as a solid state drive (SSD). Furthermore, memory 601 may be an internal memory incorporated in a CPU or GPU.

Communication IF 602 is formed by a circuit that provides communication, such as cellular communication, wireless LAN, wired LAN, or near-field radio communication, for example. Here, the cellular communication corresponds to long term evolution (LTE (registered trademark)), for example. The wireless LAN corresponds to WiFi (registered trademark) (IEEE 802.11 and revised standards thereof), for example. The wired LAN corresponds to Ethernet (registered trademark), for example. The near field radio communication corresponds to Bluetooth (registered trademark), for example.

Furthermore, communication IF 602 may include an antenna for wireless communication or a terminal to be connected to a cable for wired communication.

Input IF 603 may include a touch panel and a button provided in terminal 101 or may include a communication IF to a peripheral device that is connected to terminal 101 via wireless communication or wired communication. As the communication IF to the peripheral device, the universal serial bus (USB) may be used, or WiFi or Bluetooth described above may be used. Note that communication IF 602 described above may also be used as the communication IF to a peripheral device.

Using memory 601, processor 600 of terminal 101 executes a program stored in memory 601 and performs processing concerning provision of a virtual space.

Memory 601 stores a program, data or the like. For example, memory 601 may store a program that is executed by processor 600, store data to be processed by processor 600, or data processed by processor 600. Furthermore, memory 601 may store data to be transmitted from communication IF 602, data received by communication IF 602, or data input via input IF 603.

Furthermore, memory 601 may store data to be processed by video signal processing unit 604 or data processed by video signal processing unit 604. Furthermore, memory 601 may store data to be processed by audio signal processing unit 605, data processed by audio signal processing unit 605, or data obtained by sensor 606.

Writing and reading of data to and from memory 601 are performed based on an instruction from processor 600, for example. However, the present disclosure is not limited to this. For example, data received at communication IF 602 may be directly written to memory 601. Furthermore, data to be transmitted from communication IF 602 may be read from memory 601 and directly input to communication IF 602.

Communication IF 602 performs wireless communication or wired communication. Specifically, communication IF 602 communicates with server 100 over an arbitrary network, such as the Internet or a CDN. The method in which communication IF 602 communicates with server 100 is the same as the method in which communication IF 302 of server 100 communicates with terminal 101. Note that communication IF 602 can perform not only communication with server 100 but also communication with equipment used together with terminal 101.

Input IF 603 detects and obtains an operation performed by the user via a touch panel or the like included in terminal 101 as input data. Furthermore, the operation input received by input IF 603 is not limited to the operation input from the user via a device incorporated in terminal 101. For example, input IF 603 may receive an operation input from the user via an external controller or the like connected thereto via wired communication or wireless communication.

Video signal processing unit 604 performs signal processing on a video signal to be displayed on terminal 101 or a video signal obtained with by a camera. The signal processing performed by video signal processing unit 604 includes encoding processing for compressing a video signal and decoding processing for expanding a compressed video signal. Video signal processing unit 604 may output the processing result in the form of an image from a display device included in terminal 101 or a display device connected to terminal 101 via wired communication or wireless communication. Here, the image may be a video.

Audio signal processing unit 605 performs signal processing on an audio signal to be presented by terminal 101 or an audio signal collected by a microphone. The signal processing performed by audio signal processing unit 605 includes encoding processing for compressing an audio signal and decoding processing for expanding a compressed audio signal. Audio signal processing unit 605 may output the processing result in the form of a sound from a sound output device included in terminal 101 or a sound output device connected to terminal 101 via wired communication or wireless communication.

Sensor 606 is a sensor included in terminal 101. Sensor 606 may be formed by one or more of a camera, a light detection and ranging (LiDAR), a microphone, a touch panel, a global positioning system (GPS), an acceleration sensor, a gyro sensor, and a temperature sensor, for example.

Sensing data obtained with sensor 606 may be detected by input IF 603 as an operation by the user or may be transmitted to server 100 as a detection result concerning the surrounding environment of terminal 101.

### [Virtual Space]

The virtual space according to the present disclosure is represented by space data including three-dimensional shape data that indicates a three-dimensional shape of an object, such as a topography in the space or a building placed in the space. The virtual space need not be a three-dimensional space. The virtual space may be a two-dimensional plane. When the virtual space is a two-dimensional plane, space data includes two-dimensional shape data that indicates a region in which the user can move, for example. Furthermore, when the virtual space is a two-dimensional plane, the space data may include image data.

Although data that represents a virtual space is referred to as space data in the above description, other expressions may be used. For example, the data that represents a virtual space may be referred to as map data, topography data, or content data. Furthermore, as described above, the space data may include data on a building placed in the space. Alternatively, the data on a building placed in the space may be managed as object data separated from the space data.

Object data on an object placed in the virtual space may include metadata associated with the object, in addition to the three-dimensional shape data. The metadata indicates an attribute of the object or information specific to the object, for example. For example, the metadata may include information that indicates whether the object placed in the space is a building. Note that although data such as an attribute associated with an object is referred to as metadata here, other expressions may be used.

The virtual space may include not only a visible object, that is, an object displayed on a screen, but also an invisible object, that is, an object that is not displayed on a screen. The invisible object is an object that relates to an arbitrary phenomenon, such as a flow of air or water in the space, and may be an object represented as a vector that indicates the direction and magnitude of a movement or acceleration.

Furthermore, another example of the invisible object may be an object that indicates a characteristic of the space, such as the temperature, the humidity, or the odor of a region of the space, fine particles included in a region of the space, or the kind or concentration of a chemical substance in a region of the space. Data on an invisible object may include three-dimensional shape data or may include position data or region data that indicates the position or region in the virtual space at which the invisible object is located.

The position data indicates coordinate values in the coordinate system of the virtual space. Furthermore, when the virtual space is associated with the real space, the position data may indicate coordinate values in the coordinate system that can represent the position in the real space. The position data may indicate relative position information or rotation information that indicates the correspondence between the coordinate system of the virtual space and the coordinate system of the real space.

Furthermore, when the virtual space is divided into a plurality of unit spaces, the position data may indicate an index value of a relevant unit space. Furthermore, when a position that can be used as a reference position is defined in the virtual space, the position data may indicate the position in the form of the difference from the reference position. Furthermore, the coordinate system that represents positions in the virtual space is not limited to the Cartesian coordinate system. The coordinate system that represents positions in the virtual space may be the polar coordinate system, for example.

The region data includes information that indicates a representative position in a region and information that indicates the size of the region, for example. The representative position of a region may be the position of the center of the region, or when the region has the shape of a rectangular parallelepiped, the representative position of the region may be the position of the vertex whose coordinate values along the three axes are the smallest. However, the representative position of the region is not limited to these positions. Any position inside or outside of the region can be used as the representative position according to the predetermined manner of description of the region.

As the size of the region, for example, the dimensions of the region in the three axial directions of the coordinate system representing the virtual space are used, for example. The dimensions in the three axial directions are values of the height, the width, and the depth of the region, for example. However, the size of the region is not limited to the dimensions in the three axial directions. For example, when the region is represented as a sphere, the value of the diameter or radius of the region may be used. Alternatively, when the region has the shape of an oval sphere, the diameter or radius in the major axis direction of the oval sphere, the diameter or radius in the minor axis direction, and the diameter or radius in the direction perpendicular to both the major axis direction and the minor axis direction may be used.

Furthermore, when a region is defined by a plurality of planes each of which is parallel to any one of the three axes representing the virtual space, the position and size of the region are determined by the minimum value and maximum value of the region on each of the three axes. For example, among the eight vertices of the rectangular parallelepiped representing the region, the coordinate values of the vertex that is the closest to the origin and the coordinate values of the vertex that is the farthest from the origin may determine the position and size of the region. In that case, the coordinate values of one vertex may be used as the representative position described above, and the coordinate values of the other vertex may be used as information that indicates the size of the region.

The virtual space may be formed only by a virtual object generated by an administrator or user of the virtual space.

Alternatively, the virtual space may include a virtual object generated based on data obtained by sensing of the real world with a sensor, such as a camera or light detection and ranging (LiDAR). That is, the virtual space may include a virtual object that is a copy of an object in the real space. Furthermore, all objects in the virtual space may be formed only by virtual objects that correspond to objects in the real space.

The virtual object that corresponds to an object in the real space, that is, the virtual object that is a copy of an object in the real space, is not limited to the virtual object generated based on data obtained by sensing of the real world. For example, a virtual object may be generated based on drawing data or computer-aided design (CAD) data on a building built in the real space or an arbitrary object, such as a statue, device, or equipment placed in the real space.

Furthermore, the virtual object may be generated based on data obtained by performing signal processing on sensing data obtained by sensing of the real world. For example, the signal processing that is performed on sensing data may be extraction processing for selecting only a part of sensing data relating to generation of a virtual object or interpolation processing for sensing data that is discretely obtained.

In the above description, the extraction processing and the interpolation processing are listed as examples of the signal processing. However, the signal processing may be other processing. For example, the signal processing may include estimation processing for an object. Specifically, in the estimation processing, the degree of agreement between sensing data and object candidate data, such as a three-dimensional model or image, registered in a database. Then, an object candidate that corresponds to object candidate data whose degree of agreement is evaluated to be high may be estimated as an object that corresponds to the sensing data.

Furthermore, processing, such as data simplification, meshing, voxelization, or deformation, may be performed on the sensing data or a three-dimensional shape model generated from the sensing data. Furthermore, data on a virtual object may include attribute information, such as color or reflectance, obtained by shooting an object in the real space with a camera or LiDAR, in addition to the shape data generated based on the object in the real space. Furthermore, the attribute information on the virtual object may be generated from the shape of or attribute information on the object in the real space.

The device used for sensing may be a camera, a LiDAR, a wireless transceiver, or an ultrasonic sonar, for example. The virtual object may be generated by combining a plurality of pieces of sensing data obtained from a plurality of sensing devices.

Object data on an object corresponding to the real space may include information indicating the size of the object in the real space. The information indicating the size of the object in the real space may include the value of the size of the object in the real space or the value of the scale ratio between the size of the object in the virtual space and the size of the object in the real space.

FIG. 7 is a diagram illustrating a configuration example of a virtual space coordination system. In the example in FIG. 7, the virtual space coordination system includes terminal 101, first server 701, and second server 702. First server 701 is a server device that provides a first virtual space. Second server 702 is a server device that provides a second virtual space. That is, the virtual space coordination system includes a plurality of virtual space systems and provides a plurality of virtual spaces. Each virtual space system corresponds to the virtual space system illustrated in FIG. 1.

Specifically, the virtual space coordination system includes a first virtual space system that provides the first virtual space and a second virtual space system that provides the second virtual space. First server 701 is a server device in the first virtual space system that provides the first virtual space. Second server 702 is a server device in the second virtual space system that provides the second virtual space.

Terminal 101 is included in both the first virtual space system and the second virtual space system. For example, the first virtual space system and the second virtual space system can operate independently from each other, have different specifications, and are managed by different administrators.

Furthermore, terminal 101 in FIG. 7 corresponds to terminal 101 in FIG. 1 and includes a plurality of components illustrated in FIG. 5 or 6, for example. Furthermore, each of first server 701 and second server 702 in FIG. 7 corresponds to server 100 in FIG. 1 and includes a plurality of components illustrated in any of FIGS. 2 to 4, for example. Each of terminal 101, first server 701, and second server 702 may further include an additional component or perform additional processing.

For example, terminal 101 performs, at communication IF 602, communication with first server 701 that provides the first virtual space and second server 702 that provides the second virtual space. Specifically, terminal 101 communicates with first server 701 when terminal 101 receives a request for operation in the first virtual space from the user. Furthermore, terminal 101 communicates with second server 702 when terminal 101 receives, from the user, a request for transfer from the first virtual space to the second virtual space.

As described above, terminal 101 communicates with first server 701 or second server 702 in response to the communication request from the user. Note that terminal 101 may communicate with first server 701 or second server 702 at an arbitrary timing, rather than in response to the communication request from the user.

Furthermore, the virtual space coordination system may include more servers that provide more virtual spaces. And terminal 101 may communicate with other servers. Furthermore, first server 701, second server 702, and other servers may communicate with each other.

The transferring of a user between a plurality of virtual spaces is achieved by the user changing the virtual space to be participated from the first virtual space to the second virtual space, for example.

Here, the transferring of a user between a plurality of virtual spaces corresponds to a user in the first virtual space being transferred to the second virtual space, for example. That is, the transferring of a user between a plurality of virtual spaces corresponds to an avatar representing the user in the first virtual space or a character object manipulated in the first virtual space by the user being transferred to the second virtual space, for example. That is, the transferring of a user between a plurality of virtual spaces corresponds to the transferring of an item between the plurality of virtual spaces.

In other words, the transferring of a user between a plurality of virtual spaces corresponds to the transferring of the user between a plurality of virtual space systems and corresponds to the transferring of an item between a plurality of virtual space systems.

FIG. 8 is a block diagram illustrating a configuration example of first server 701. Second server 702 may have the same components as those of first server 701.

First server 701 includes information processing unit 200, content manager 201, user manager 202, and coordination manager 203. Information processing unit 200 is connected to content manager 201, user manager 202, and coordination manager 203 and appropriately obtains required data. Note that a method of using data in the case where the user is transferred between virtual spaces will be described later.

A plurality of components illustrated in FIG. 8 may be implemented by a plurality of components illustrated in FIG. 3 or may be implemented by a plurality of components illustrated in FIG. 4. Furthermore, first server 701 may include a coordination management server and a coordination DB that correspond to coordination manager 203, in addition to the plurality of components illustrated in FIG. 4.

### [Content data]

Content data is data concerning a content included in a virtual space. Content data includes one or more of three-dimensional model information, two-dimensional model information, invisibility information and the like. Furthermore, content data corresponds to virtual space information for displaying a virtual space.

### <Three-dimensional model information>

Three-dimensional model information is data concerning a three-dimensional model among contents included in a virtual space. Three-dimensional model information includes one or more of space information, object information, avatar information and the like. Space information is three-dimensional shape data on a background of a virtual space (i.e., the virtual space itself).

Space information may be shape data from a subjective point of view of a user or shape data from an objective point of view. Space information may include not only three-dimensional shape data but also metadata that indicates an attribute of an object placed in the space or the like.

Object information indicates the shape of an object, such as a topography in the space or a building placed in the space, and is represented by three-dimensional shape data. The object is not limited to a visible object, such as a building, a person other than the user, an animal, or a character, and may be an invisible object. The three-dimensional shape data may be a point cloud or polygon data, such as a mesh.

Avatar information is three-dimensional shape data on an avatar that serves as a proxy for the user who manipulates the avatar. The avatar may correspond to any of a person, an animal, a character and the like, for example.

Note that these pieces of content data may be static data that does not change over time or may be dynamic data that changes over time.

### <Two-dimensional model information>

Two-dimensional model information is data concerning a two-dimensional model among contents included in a virtual space. Two-dimensional model information differs from three-dimensional model information in that the two-dimensional model information includes no depth information. Two-dimensional model information may be any of a static image, a moving image, a 360-degree image and the like, for example. Note that although space information, object information, and avatar information are included in three-dimensional model information in this embodiment, space information, object information, and avatar information may be included in two-dimensional model information.

### <Invisibility information>

Invisibility information includes information on a content that relates to a sense other than the visual sense and additional information that is included neither in the two-dimensional model nor in the three-dimensional model, among contents included in a virtual space. Invisibility information includes text information, audio information, and attribute information, for example.

Attribute information is information that relates to an ability, characteristic or the like of an avatar, for example. The ability is acquired in accordance with an operation, the login duration or the like of the user in the first virtual space. The ability may be referred to as skill or level value. The characteristic may be sex or age of the avatar or an attribute specific to the character, for example.

### [User data]

User data is data that relates to a user who uses a virtual space. One set of user data is set for one user. User data includes one or more of a user identifier, personal information, virtual space item information, spatial movement information and the like, for example.

The user identifier is an identifier of a user registered in each virtual space. In other words, the user identifier is linkage information between a user and an index. Alternatively, a user identifier is possible which can be commonly used in a plurality of virtual spaces that are coordinated with each other.

The personal information is personal information on a user and includes name, age, birth date and the like.

The virtual space item information is set for each virtual space used by a user. Virtual space item information is information that relates to an item used in a virtual space.

Item is a general name of tools used by a user (or avatar or the like) in a virtual space. An avatar may be an example of the item. Items include an object that is somehow available to a user in a virtual space, such as an avatar, an animated avatar, clothes an avatar can wear, an accessory, a belonging, a currency in a virtual space, and other objects. Items may include invisible objects.

Spatial movement information is information that relates to a movement of a user (or an avatar or the like). Movement information includes position information on a user (or an avatar or the like) and animation, a movement, a direction of movement, and a speed of a user (or an avatar or the like) that are obtained in real time, for example.

### [Coordination data]

Coordination data is content data or metadata used for transferring of a user between a plurality of virtual spaces. Coordination data is determined in advance between a plurality of virtual spaces that coordinate with each other, and is defined in a syntax, a description manner, and a format that can be analyzed in each of the plurality of virtual spaces. For example, coordination data includes one or more of a virtual space identifier, a group identifier, a transfer permission level, currency information, a predetermined rule in a virtual space and the like.

The virtual space identifier is an identifier that is assigned in advance to uniquely identify a virtual space that coordinates with another virtual space.

The group identifier is an identifier that is assigned in advance to uniquely identify a group of a plurality of virtual spaces. For example, the group identifier may be used to assign the same identifier to a plurality of virtual spaces with a common rule, currency information or the like.

The transfer permission level is a level that is assigned to each virtual space in terms of compatibility in transferring between a plurality of virtual spaces, for example. It may be prescribed that transferring from a virtual space with a higher level to a virtual space with a lower level is permitted and transferring from a virtual space with a lower level to a virtual space with a higher level is not permitted. For example, a level of 1 is assigned to virtual space A, and a level of 2 is assigned to virtual space B. In this case, a user in virtual space A can be transferred to virtual space B, although a user in virtual space B cannot be transferred to virtual space A.

Note that although a user in virtual space B cannot normally be transferred to virtual space A, if a user was originally in virtual space A and transferred to virtual space B, the user may be able to be transferred back to virtual space A.

The currency information is information that relates to a parameter that is used as a currency in a virtual space. The currency information may include an exchange rate with respect to a reference value common to a plurality of virtual spaces.

The predetermined rule is a rule about transferring between a plurality of virtual spaces, for example. For example, object information or coordinate information for presenting, to a virtual space, an inlet and an outlet for transferring between a plurality of virtual spaces may be prescribed as a predetermined rule.

### [Presentation Control]

There are cases where presenting all of various travelable spaces, various three-dimensional objects, and so on, in a virtual space is not necessarily suitable for a usage state, etc. For example, presenting a travelable space or a three-dimensional object, or the like, that is not suitable for the usage state, etc., may lead to the degradation of realism. Furthermore, presenting various travelable spaces, various three-dimensional objects, and so on, may cause an increase in processing load.

In the present embodiment, for each of a plurality of candidate travelable spaces, whether the candidate travelable space satisfies a condition is determined, and according to the determination result, whether to present candidate travelable space in the virtual space is controlled. Similarly, for each of a plurality of candidate three-dimensional objects, whether the candidate three-dimensional object satisfies a condition is determined, and according to the determination result, whether to present the candidate three-dimensional object in the virtual space is controlled.

It should be noted that, here, a user in the virtual space may be a virtual user in the virtual space, and specifically, may be the avatar of the user. Traveling of the user in the virtual space may be traveling of the avatar of the user in the virtual space. In addition, the virtual space may include a plurality of virtual spaces provided by a plurality of virtual space systems. In addition, display and present may be read interchangeably. In addition, a three-dimensional object may be also represented as a 3D object or 3D Asset.

FIG. 9 is a flowchart illustrating an example of display control processing for candidate travelable spaces according to the present embodiment. In this example, the display control processing is performed on each of a plurality of candidate travelable spaces. The display control processing may be performed by any of terminal 101, server 100, first server 701, and second server 702.

A candidate travelable space is a candidate space that a user can travel to in a virtual space. A plurality of candidate travelable spaces may correspond to a plurality of virtual spaces provided by a plurality of virtual space systems, respectively, or may be a plurality of partitioned spaces in one virtual space provided by one virtual space system. The plurality of candidate travelable space may correspond to a plurality of rooms, may correspond to a plurality of floors, or may correspond to a plurality of worlds.

In this example, first, whether there is any unprocessed candidate travelable space is determined (S101). Here, an unprocessed candidate travelable space is a candidate travelable space that has not been subjected to determination of displaying or undisplaying, and that may be presented to the user.

For example, when the user approaches a candidate travelable space in the virtual space, in the case where the candidate travelable space has not been subjected to determination of displaying or undisplaying, it may be determined that there is an unprocessed candidate travelable space. Alternatively, when the user enters the virtual space that includes a candidate travelable space, in the case where the candidate travelable space has not been subjected to determination of displaying or undisplaying, it may be determined that there is an unprocessed candidate travelable space.

When there is no unprocessed candidate travelable space (No in S101), the display control processing ends. On the other hand, when there is an unprocessed candidate travelable space (Yes in S101), whether the candidate travelable space satisfies a condition is determined (S102).

The condition may correspond to an age (the avatar age, the actual age), participation eligibility, device processing performance, preferences, user setting, or a combination of one or more of these. That is, the condition may be that an age (avatar age, actual age), participation eligibility, device processing performance, preferences, user setting, or a combination of one or more of these meets a certain criterion.

In addition, when the candidate travelable space satisfies the condition (Yes in S102), a candidate travelable space is displayed in the virtual space (S103). In this case, processing may be performed so that the candidate travelable space is displayed. For example, the display position of the candidate travelable space may be adjusted to a position that can be visually recognized by the user. In addition, displaying the candidate travelable space may be displaying an entrance for traveling to the travel destination corresponding to the candidate travelable space.

On the other hand, when the candidate travelable space does not satisfy the condition (No in S102), the candidate travelable space is not displayed in the virtual space (S104). In this case, processing may be performed so that the candidate travelable space is not displayed. For example, the display position of the candidate travelable space may be adjusted to a position that cannot be visually recognized by the user.

In addition, in undisplay processing of the candidate travelable space, it may be notified that going to the candidate travelable space is not permitted. For example, a situation may be displayed that a door for going to the candidate travelable space is broken, the door is locked, or the like. Alternatively, other information that can be displayed may be presented. For example, an advertisement that can be displayed may be presented. Accordingly, in the virtual space, wasted space is reduced, and the space is effectively utilized.

The above-described processing is performed on each of a plurality of candidate travelable spaces. Accordingly, the virtual space suitable for the condition can be displayed. In addition, the number of candidate travelable spaces to be displayed can be reduced, and the candidate travelable spaces can be efficiently displayed.

FIG. 10 is a conceptual diagram illustrating an example display of candidate travelable spaces according to the present embodiment. In this example display, three candidate travelable spaces exist. When the user is an adult, the three candidate travelable spaces are displayed. Specifically, the respective entrances to the three candidate travelable spaces are displayed as candidate travelable spaces. On the other hand, when the user is a child, only one candidate travelable space of the three candidate travelable spaces is displayed. Accordingly, virtual spaces suitable for adults and children, respectively, can be displayed.

In addition, it may be notified that it is an entrance to a virtual space (candidate travelable space) of another platform. Specifically, the appearance of the entrance to the virtual space of the other platform may be changed. In addition, it may be notified that, in order to proceed through the door, the change of the avatar occurs. Accordingly, it is possible to prompt the user to determine whether to proceed before traveling.

In addition, it may be possible to set, to the user, user setting information and authenticated information. Here, the user setting information is information that can be freely set in a virtual space. The user setting information may be avatar information on the avatar that is set by the user, and may include, for example, the age, height, weight, sex, an item, and the like of the avatar. That is, the user setting information indicates a virtual attribute of the user.

The authenticated information is not a value that is set by the user, but is information that has been authenticated as being correct. That is, the authenticated information indicates a user's actual attribute. The real attribute of the user may be expressed as the original attribute of the user, the actual attribute of the user, or the like.

The information used for authentication is not only official ID cards (a license, a My Number card, an insurance card, a student ID card, a passport, or the like), but may be a credit card, an employee ID card, a business card, an airline ticket mileage, or the like. The authenticated information may be, for example, information that is authenticated based on the information or the like used for such authentication, and may be the actual age, the date of birth, the full name, the ID for identifying the user, the occupation, the place of employment, the sex, the academic background, the company setting rank, the annual income, the criminal history, and the like. Accordingly, the degree of freedom for determination of traveling to a travelable space is improved.

An example of the user setting information is the avatar age, and an example of the authenticated information is an actual age. The avatar age is, for example, the age of an avatar used by a user in a virtual space. The actual age represents the age of the user in a real world. The actual age and the avatar age need not necessarily match. Specifically, a user who is 10 years old in the real world may be able to set 30 years old to the avatar age in a virtual space. In addition, conversely, a user who is 30 years old in the real world may be able to set 10 years old to the avatar age in the virtual space.

Accordingly, it is possible to provide each user with a life spent in the virtual space at the avatar age that is different from the actual age, and it is possible to provide experiences different from those in the real world.

The information on actual age can be obtained by using information authenticated in the real world. The information authenticated in the real world may be obtained from any kind of information. For example, the information on a driver's license, a passport, a credit card, or the like may be input by the user, and the information authenticated in the real world may be obtained from this information. In addition, when the user is a minor, parental approval may be required for inputting the actual age. Accordingly, the correct actual ages of users can be obtained.

It should be noted that the avatar age is an example of the user setting information, and the actual age is an example of the authenticated information. The user setting information and the authenticated information are not limited to these. In addition, the actual age may be obtained as the user setting information based on, for example, an input of date of birth, or the like.

It may be switched which information of the user setting information (avatar age) and the authenticated information (actual age) is to be used for control. For example, which information is to be used for control may be switched according to a scene, an application, or the like.

More specifically, for example, when a 10-year-old user sets his/her avatar age to 30 years old, the avatar age is displayed on a screen, and the user can live as the avatar. On the other hand, the actual age may be used as the condition for candidate travelable space to determine displaying or undisplaying. Accordingly, a candidate travelable space appropriate for the 10-year-old user is displayed. Therefore, the virtual space that can protect users can be provided.

The display control processing may be performed as initial setting for each traveling to a candidate travelable space. Accordingly, common processing can be applied to each user, and initialization processing can be simplified.

The condition may be a condition determined by a virtual space system before traveling, or may be a condition determined by a virtual space system of a travel destination. It should be noted that, in the latter case, the virtual space system before traveling may confirm the virtual space system of the travel destination whether information on a door for traveling to the travel destination, or the like may be presented to a user. Accordingly, it is possible to present an appropriate candidate travelable space to which the situation of the virtual space system of the travel destination is also reflected.

In addition, for example, common original space information may be transmitted from server 100 to terminal 101, and a display content may be chosen in terminal 101 according to user information. Accordingly, the data transmitted to terminal 101 can be unified. In addition, the data transmitted according to the user information of terminal 101 may be chosen in server 100. Accordingly, in terminal 101, received data can be displayed as is, and the processing amount can be reduced.

When data is chosen in server 100, user information may be transmitted in advance from terminal 101 to server 100. Accordingly, server 100 can generate information appropriate for the user.

In addition, it may be switched which information of the information that is set to the user (the actual age, the date of birth, the sex, the height, the weight, the sex, and the like) and the information that is set to the avatar (for example, the age, height, weight, sex, and the like of the avatar) is to be used for control.

FIG. 11 is a flowchart illustrating an example of display control processing for candidate 3D objects according to the present embodiment. In this example, the display control processing is performed on each of a plurality of candidate 3D objects. The display control processing may be performed by any of terminal 101, server 100, first server 701, and second server 702.

A candidate 3D object is a candidate for a 3D object to be presented to a user in a virtual space. A 3D object may be the entrance door or the like of a candidate travelable space, or may be the other object. In addition, a 3D object may be an object displayed in a three-dimensional manner on a two-dimensional flat surface. For example, a 3D object may be an object displayed by being projected onto a two-dimensional flat surface. Alternatively, a 3D object may be an object that is stereoscopically displayed by parallax.

In this example, first, whether there is any unprocessed candidate 3D object is determined (S201). Here, an unprocessed candidate 3D object is a candidate 3D object that has not been subjected to determination of displaying or undisplaying, and that may be presented to the user.

For example, when a user approaches a candidate 3D object in a virtual space, in the case where determination of displaying or undisplaying the candidate 3D object has not been performed, it may be determined that there is an unprocessed candidate 3D object. Alternatively, when a user enters a virtual space that includes a candidate 3D object, when determination of whether to display or undisplay the candidate 3D object has not been performed, it may be determined that there is an unprocessed candidate 3D object.

When there is no unprocessed candidate 3D object (No in S201), the display control processing ends. On the other hand, when there is an unprocessed candidate 3D object (Yes in S201), whether the candidate 3D object satisfies a condition is determined (S202).

The condition may correspond to an age (avatar age, actual age), participation eligibility, device processing performance, preferences, user setting, a combination of one or more of these, or the like. That is, the condition may be that an age (avatar age, actual age), participation eligibility, device processing performance, preferences, user setting, a combination of one or more of these, or the like meets a certain criterion.

In addition, when the candidate 3D object satisfies the condition (Yes in S202), the candidate 3D object is displayed in the virtual space (S203). In this case, processing may be performed so that the candidate 3D object is displayed. For example, the display position of the candidate 3D object may be adjusted to a position that can be visually recognized by the user.

On the other hand, when the candidate 3D object does not satisfy the condition (No in S202), the candidate 3D object is not displayed in the virtual space (S204). In this case, processing may be performed so that the candidate 3D object is not displayed. For example, the display position of the candidate 3D object may be adjusted to a position that cannot be visually recognized by the user.

In addition, in undisplay processing of the candidate 3D object, it may be notified that the candidate 3D object is not displayed in the virtual space. For example, the candidate 3D object may be displayed in a blurred manner.

Alternatively, another information that can be displayed may be presented. For example, an advertisement that can be displayed may be presented. Accordingly, in the virtual space, wasted space is reduced, and the space is effectively utilized.

FIG. 12 is a conceptual diagram illustrating an example display of candidate 3D objects according to the present embodiment. In this display example, three candidate 3D objects exist. When the user is an adult, three candidate 3D objects are displayed. On the other hand, when the user is a child, only one candidate 3D object of the three candidate 3D objects is displayed. Accordingly, virtual spaces suitable for adults and children, respectively, can be displayed.

In addition, it may be notified that a candidate 3D object is not displayed. For example, appearance may be changed. Accordingly, it becomes possible to notify the user of the information indicating the existence of a candidate 3D object that is not displayed.

It may be switched which information of the user setting information (avatar age) and the authenticated information (actual age) is to be used for control. For example, which information is to be used for control may be switched according to a scene, an application, or the like.

More specifically, for example, when a 10-year-old user sets his/her avatar age to 30 years old, the avatar age is displayed on a screen, and the user can live as the avatar. On the other hand, the actual age may be used as the condition for candidate 3D object to determine displaying or undisplaying. Accordingly, a candidate 3D object appropriate for the 10-year-old user is displayed. Therefore, the virtual space that can protect users can be provided.

Information, such as the avatar age or the actual age for which a candidate 3D object can be displayed, may be added to a candidate 3D object as metadata. Accordingly, for example, when the actual age of the user is equal to or more than a target actual age added to a candidate 3D object, the candidate 3D object is displayed, and otherwise, displaying and undisplaying are switched so that the candidate 3D object is not displayed.

In addition, a candidate 3D object to be displayed may be switched according to the actual age of the user. For example, as the 3D object of a drink, alcohol may be displayed to a user whose actual age is 20 or older, and a soft drink may be displayed to a user who is not. Accordingly, 3D objects appropriate for the actual age of a user can be displayed.

In addition, a candidate 3D object to be displayed may be switched according to the preferences of the user. For example, a candidate 3D object may be switched so that, at the same position in the virtual space, a dog is displayed when the user is a dog lover, and a cat is displayed when the user is a cat lover. Accordingly, a 3D object appropriate for the preferences of the user can be displayed.

In addition, for a candidate 3D object, the information having the same shape may be prepared, and the information on a plurality of textures to be mapped (pasted) to this shape may be prepared. In addition, the texture to be pasted may be switched according to the preferences of the user. Accordingly, compared with a system in which a plurality of candidate 3D objects are prepared for each texture, the data amount can be reduced.

In addition, texture information may be generated and may be changed according to the preferences of the user by using AI technologies such as diffusion models. Accordingly, the candidate 3D object with a texture appropriate for the preferences of the user can be displayed.

The display control processing may be performed as initial setting for each traveling to a candidate travelable space. Accordingly, common processing can be applied to each user, and initialization processing can be simplified.

In addition, for example, common original space information may be transmitted from server 100 to terminal 101, and a display content may be chosen in terminal 101 according to user information. Accordingly, the data transmitted to terminal 101 can be unified. In addition, the data transmitted according to the user information of terminal 101 may be selected in server 100. Accordingly, in terminal 101, received data can be displayed as is, and the processing amount can be reduced.

When data is chosen in server 100, user information may be transmitted in advance from terminal 101 to server 100. Accordingly, server 100 can generate information appropriate for the user.

When the same virtual space is shared by all participants, the user information to be used for a determination condition may be determined from a plurality of pieces of user information on all or a part of the participants, such as the avatar ages or actual ages of the participants (users). Then, the display method may be switched according to the determined user information.

For example, the minimum actual age of a plurality of users who are participating in the same virtual space may be calculated. Then, a candidate travelable space and a candidate 3D object that are displayed in the virtual space may be switched according to the minimum actual age. Accordingly, the candidate travelable space and the candidate 3D object that are displayed according to the information on the plurality of users participating in the virtual space can be appropriately switched. Therefore, for example, a virtual space appropriate for a plurality of participants (a plurality of users) can be timely provided.

It should be noted that determination of displaying or undisplaying need not be necessarily performed based on the information on a plurality of users for all candidate travelable spaces and candidate 3D objects. For example, the information to be used for determination may be switched, so that, for a candidate travelable space (a door or the like), displaying or undisplaying is determined based on the information on a plurality of users, and for advertisement information and the like, displaying or undisplaying is determined based on the information on each user.

Accordingly, for contents to be commonly displayed in the virtual space, displaying or undisplaying control is commonly performed for a plurality of users by performing display control according to the information on the plurality of users. In addition, for contents to be individually displayed, displaying or undisplaying control appropriate for individual users is performed by performing display control according to the information on the individual users. Therefore, displaying or undisplaying can be appropriately controlled for contents to be commonly presented and contents to be individually presented.

In addition, a plurality of users may be integrated into a plurality of groups, and displaying or undisplaying may be unified for each group. For example, a group that shares a virtual space may be created, a plurality of users may be associated with the group, and displaying and undisplaying of a candidate travelable space or a candidate 3D object may be switched based on the information on the group. Here, the information on the group may be calculated from the information on the plurality of users who belong to the group.

For example, displaying and undisplaying of a candidate travelable space or a candidate 3D object may be switched by using the minimum actual age of the plurality of users who belong to the group as the actual age corresponding to the group. Accordingly, displaying or undisplaying of contents in the virtual space can be appropriately controlled for each group. For example, while displayed contents are different between groups, displayed contents are unified and shared within a group.

A group may be created before a user enters a virtual space, or may be selectable in advance by the user. Alternatively, a group may be freely created in a virtual space by a user after the user enters the virtual space.

A group may be automatically generated according to the information on users. For example, a group for avatar ages of 20 and over may be created, and a user who matches the condition may be automatically included in the group. Accordingly, the processing of setting a group for each user can be automated.

A group may be created with an intention. For example, a group for performing a certain activity may be created. Then, whether a user enters the group may be selected by the user himself/herself. Accordingly, a group created with an intention can be provided to users.

In addition, whether to perform group control in which displaying or undisplaying is controlled in units of groups may be switched. For example, whether to perform the group control may be switched according to spaces. More specifically, in a lobby space in a virtual space, the group control may be set to OFF. In addition, in a space in which an advertising content exists, the group control may be set to ON. Accordingly, in a space in which it is appropriate to switch displaying and undisplaying in units of groups, switching between displaying and undisplaying of contents can be appropriately performed in units of groups.

In addition, the group control may be performed according to, for example, the time. More specifically, in time period A, the group control may be set to OFF, and the group control may be set to ON in time period B. Accordingly, in the time during which the group control is appropriate, switching between displaying and undisplaying of contents can be appropriately performed in units of groups.

In addition, the information on plurality of participants (user) may be collected in server 100. Then, a determination result based on this information may be fed back to terminal 101 of each participant, and a content displayed on terminal 101 of each participant may be switched. Accordingly, the display method and appearance of a virtual space can be changed according to whether the number of the participants are increased or decreased.

In addition, the method of representing an avatar age is not limited to a method of displaying the avatar age in characters, but may be a method of changing the appearance of clothing according to the avatar age. For example, the avatar age may be represented by the color of a hat, the color of a tie, or the color of shoes. Accordingly, it is possible to apply, to a participant, the information for determining the avatar ages of the other participants by appearance.

In addition, according to a use case, which age of the avatar age and the actual age is to be used may be switched. For example, when the avatar age is set to 30 years old by a user whose actual age is 10 years old, the avatar age is displayed on a screen, and the user can live as the avatar. However, for advertisements to be displayed, only advertisements that are permitted for 10 year olds and below may be displayed. For example, advertisements of alcohol, tobacco, and the like need not be presented. Accordingly, virtual spaces appropriate for actual ages can be provided.

In addition, when permission, approval, or the like is obtained, it may be possible to use the avatar age for a determination condition, instead of the actual age. For example, in the case of a minor, when parental approval is obtained, it may be possible to use the avatar age for a determination condition, instead of the actual age. Accordingly, experiences appropriate for the avatar age can be provided in a virtual space.

In addition, as the user information, the avatar height in the virtual space and the actual height in the real world may be able to be set. Then, in the virtual space, the visual field visible at the avatar height and the visual field visible at the actual height may be switched by switching between the avatar height and the actual height for the determination condition of display control. Accordingly, it is possible to provide a user with an experience of, for example, how it would be seen when the user grows taller.

In addition, in the present embodiment, displaying and undisplaying of a candidate travelable space or a candidate 3D object is switched according to a condition. The switching (changing) based on a condition is not limited to such an example, and the operation of a user may be switched according to a condition.

For example, the range of movement or actions that a user can make or take in a virtual space may be switched. More specifically, in a virtual space, shopping permission may be switched according to the actual age of the user information. Alternatively, in a virtual space, driving of an automobile may be permitted according to the avatar age. Accordingly, in a virtual space, the operation of a user can be appropriately controlled according to the user information.

In addition, switching between displaying and undisplaying of a content according to a condition and switching operations according to a condition may be combined. For example, permission of driving an automobile may be performed based on the avatar age, and advertisement display may be performed based on the actual age. In addition, as another example, determination of whether to display, for example, a casino as a candidate travelable space may be performed based on the avatar age, and determination of whether or not gambling in a casino can be conducted may be performed based on the actual age.

Accordingly, new experiences can be provided to a user based on the avatar age, while limiting presentation of contents and actions based on the actual age of the user.

In addition, in the present embodiment, displaying and undisplaying of a candidate travelable space is switched according to a condition. The switching based on a condition is not limited to such an example. For example, the destinations of the same door may be different between 20 year olds and below and the others. Specifically, the floor, which is the destination for a user, may be automatically switched. In addition, the travel destination corresponding to a candidate travelable space may be switched according to the user information, such as the preferences of the user.

The changing method of a travel destination is not limited to be performed by switching URLs as in the Web, and the travel destination may be switched by, for example, switching the position information on the travel destination in a virtual space for each user. Accordingly, the travel destination can be automatically switched, while displaying the same candidate travelable space to the user. It should be noted that the position before traveling in the virtual space may be set as a favorite location. Accordingly, it is possible to provide the user with a method of immediately returning to the point before traveling from the travel destination.

In addition, the user information may include information such as the reliability, experience value, class, item carried, and shape of a user. Accordingly, it is possible to appropriately switch between displaying and undisplaying of a candidate travelable space or a candidate 3D object, or between operations of the user, based on the user information.

FIG. 13 is a sequence diagram illustrating an example operation when terminal 101 according to the present embodiment performs display control processing. For example, terminal 101 includes terminal IF 111 and terminal controller 112. Terminal IF 111 can correspond to input unit 505 and output unit 504. In addition, terminal controller 112 can correspond to information processing unit 500, storage 501, communication unit 502, and space modeling unit 503. Server 100 may be first server 701, or may be second server 702.

First, in STEP1, the user information is set. Specifically, the user information such as the actual age and the avatar age is input to terminal IF 111, and is notified from terminal IF 111 to terminal controller 112.

Next, in STEP2, travel is requested. Specifically, a travel request for traveling to a virtual space is input to terminal IF 111, and is notified from terminal IF 111 to terminal controller 112. In response to the travel request, terminal controller 112 transmits, to server 100, an information request for requesting virtual space information. In response to information request, server 100 transmits the virtual space information to terminal controller 112.

Next, in STEP3-1, determination and displaying of a candidate travelable space are performed. Specifically, terminal controller 112 determines displaying or undisplaying of each of a plurality of candidate travelable spaces in a virtual space, based on the user information and the virtual space information. Then, terminal controller 112 notifies terminal IF 111 of the candidate travelable space to be displayed. Then, terminal IF 111 displays the candidate travelable space to be displayed.

In addition, in STEP3-2, determination and displaying of a candidate 3D object are performed. Specifically, terminal controller 112 determines displaying or undisplaying of each of a plurality of candidate 3D objects in the virtual space, based on the user information and the virtual space information. Then, terminal controller 112 notifies terminal IF 111 of a candidate 3D object to be displayed. Then, terminal IF 111 displays the candidate 3D object to be displayed.

Either the determination and displaying of a candidate travelable space (STEP3-1) or the determination and displaying of a candidate 3D object (STEP3-2) may be performed first.

In this example, determination of displaying or undisplaying is performed in terminal 101 of the user. Server 100 can transmit the same information to respective terminals 101 of a plurality of users who utilize the virtual space. Furthermore, terminal 101 of each user can optimize displayed information.

In addition, in this example, since terminal 101 of the user performs the determination processing, the user information need not be transmitted to server 100. Therefore, there are cases where personal information can be protected.

In addition, determination and displaying of a candidate 3D object (STEP3-2) may be performed even if there is no request for traveling to the virtual space. In other words, the travel request (STEP2) and determination and displaying (STEP3-1) of the candidate travelable space may be skipped.

In addition, in the user information setting (STEP1), the user information may be transmitted to terminal 101 from other devices.

In this example, for optimization of the display on terminal 101 of each user, determination may be performed by using the user's own user information, without using the user information on the other users in the virtual space.

On the other hand, determination may be performed by using the information on the plurality of users described above. In that case, server 100 may obtain the user information on each user, and may transmit the user information on each user to terminal 101 as appropriate, or server 100 may generate the information on the plurality of users to transmit the information to each terminal 101. Accordingly, a common display is possible on the plurality of terminals 101 of the plurality of users.

When terminal 101 performs processing, a flag indicating that the processing is performed by terminal 101 may be included in data received from server 100.

In addition, terminal 101 includes a processor and a memory. The user information and the like are saved in the memory. The processor performs the determination processing and the like based on the user information saved in the memory.

FIG. 14 is a sequence diagram illustrating an example operation when server 100 according to the present embodiment performs the display control processing. Terminal IF 111, terminal controller 112, and server 100 in the example of FIG. 14 are the same components as the components in the example of FIG. 13.

First, in STEP1, the user information is set. Specifically, the user information such as the actual age and the avatar age is input to terminal IF 111, and is notified from terminal IF 111 to terminal controller 112.

Next, in STEP2, travel is requested. Specifically, a travel request for traveling to the virtual space is input to terminal IF 111, and is notified from terminal IF 111 to terminal controller 112. In response to the travel request, terminal controller 112 transmits, to server 100, an information request for requesting virtual space information. At that time, terminal controller 112 transmits, to server 100, the user information together with the information request.

Next, in STEP3-1, determination of a candidate travelable space is performed. Specifically, server 100 determines displaying or undisplaying of each of a plurality of candidate travelable spaces in a virtual space, based on the user information and the virtual space information. Then, server 100 reflects, to the virtual space information, displaying or undisplaying of each of the plurality of candidate travelable spaces.

In addition, in STEP3-2, determination of a candidate 3D object is performed. Specifically, server 100 determines displaying or undisplaying of each of a plurality of candidate 3D objects in a virtual space, based on the user information and the virtual space information. Then, server 100 reflects, to the virtual space information, displaying or undisplaying of each of the plurality of candidate 3D objects.

Next, in STEP3-3, the candidate travelable space and the candidate 3D object are displayed. Specifically, server 100 transmits, to terminal controller 112, the virtual space information to which the candidate travelable space to be displayed and the candidate 3D object to be displayed have been reflected. Then, terminal controller 112 notifies terminal IF 111 of the virtual space information to which the candidate travelable space to be displayed and the candidate 3D object to be displayed have been reflected.

Then, terminal IF 111 displays the virtual space to which the candidate travelable space to be displayed and the candidate 3D object to be displayed have been reflected. Accordingly, terminal IF 111 displays the candidate travelable space to be displayed and the candidate 3D object to be displayed.

Either the determination of the candidate travelable space (STEP3-1) or the determination of the candidate 3D object (STEP3-2) may be performed first.

In this example, the determination of displaying or undisplaying is performed in server 100. Server 100 can transmit individual data to terminal 101 of each of the plurality of users who utilize the virtual space. Therefore, the traffic can be reduced.

In addition, the determination of the candidate 3D object (STEP3-2) may be performed even if there is no request for traveling to the virtual space. In other words, the travel request (STEP2) and the determination of the candidate travelable space (STEP3-1) may be skipped.

For example, when a user travels in the virtual space, and the display of a new candidate 3D object is required, the determination of the candidate 3D object (STEP3-2) may be performed. Alternatively, when entering one space in the virtual space, the determination processing may be performed on each of a plurality of candidate 3D objects included in the one space. Then, after the processing is completed, it may become possible to travel to the space.

For example, server 100 includes a processor and a memory. The user information and the like are saved in the memory. The processor performs the determination processing and the like based on the user information saved in the memory.

FIG. 15 is a sequence diagram illustrating an example operation when server 100 according to the present embodiment performs the display control processing with respect to a plurality of users. Terminal IF 111, terminal controller 112, and server 100 in the example of FIG. 15 are the same component as the components in the example of FIG. 14. In addition, terminal IF 121 and terminal controller 122 are components equivalent to terminal IF 111 and terminal controller 112, respectively.

For example, terminal IF 111 and terminal controller 112 are the components of terminal 101 of a first user. In addition, terminal IF 121 and terminal controller 122 are the components of terminal 101 of a second user.

First, in STEP1, the user information is set. Specifically, the user information such as the actual age and avatar age of the first user is input to terminal IF 111, and is notified from terminal IF 111 to terminal controller 112. Similarly, the user information such as the actual age and avatar age of the second user is input to terminal IF 121, and is notified from terminal IF 121 to terminal controller 122.

Next, in STEP2, travel is requested. Specifically, a travel request for the first user to travel to a virtual space is input to terminal IF 111, and is notified from terminal IF 111 to terminal controller 112. In response to the travel request, terminal controller 112 transmits, to server 100, an information request for requesting virtual space information. At that time, terminal controller 112 transmits, to server 100, the user information together with the information request.

Similarly, a travel request for the second user to travel to the virtual space is input to terminal IF 121, and is notified from terminal IF 121 to terminal controller 122. In response to the travel request, terminal controller 122 transmits, to server 100, an information request for requesting virtual space information. At that time, terminal controller 122 transmits, to server 100, the user information together with the information request.

Next, in STEP3-1, determination of a candidate travelable space is performed. Specifically, server 100 determines displaying or undisplaying of each of a plurality of candidate travelable spaces in a virtual space, based on the user information and the virtual space information. Then, server 100 reflects, to the virtual space information, displaying or undisplaying of each of the plurality of candidate travelable spaces.

In addition, in STEP3-2, determination of a candidate 3D object is performed. Specifically, server 100 determines displaying or undisplaying of each a plurality of candidate 3D objects in a virtual space, based on the user information and the virtual space information. Then, server 100 reflects, to the virtual space information, displaying or undisplaying of each of the plurality of candidate 3D objects.

Next, in STEP3-3, the candidate travelable space and the candidate 3D object are displayed. Specifically, server 100 transmits, to terminal controllers 112 and 122, the virtual space information to which the candidate travelable space to be displayed and the candidate 3D object to be displayed have been reflected.

Then, terminal controller 112 notifies terminal IF 111 of the virtual space information to which the candidate travelable space to be displayed and the candidate 3D object to be displayed have been reflected. Then, terminal IF 111 displays the virtual space to which the candidate travelable space to be displayed and the candidate 3D object to be displayed have been reflected. Accordingly, terminal IF 111 displays the candidate travelable space to be displayed and the candidate 3D object to be displayed.

In addition, terminal controller 122 notifies terminal IF 121 of the virtual space information that includes the candidate travelable space to be displayed and the candidate 3D object to be displayed. Then, terminal IF 121 displays the virtual space to which the candidate travelable space to be displayed and the candidate 3D object to be displayed have been reflected. Accordingly, terminal IF 121 displays the candidate travelable space to be displayed and the candidate 3D object to be displayed.

Either the determination of the candidate travelable space (STEP3-1) or the determination of the candidate 3D object (STEP3-2) may be performed first.

FIG. 16 is a syntax diagram illustrating an example of syntax elements related to the display control processing for a candidate travelable space according to the present embodiment. Specifically in FIG. 16, a plurality of syntax elements included in each of virtual space information, travelable space information, and user information are illustrated.

Here, the virtual space information is information that indicates a virtual space, and that can include the travelable space information. The travelable space information indicates a candidate travelable space that can be displayed in the virtual space. The travelable space information may be represented as candidate travelable space information. The user information is information that indicates a user, and that can include user setting information and authenticated information.

For example, displaying and undisplaying of a candidate travelable space may be switched by comparing the travelable space information with the user information. Accordingly, an appropriate travelable space can be provided for each user. In addition, the travelable space information can include, as information, an avatar age, an actual age, participation eligibility, device processing performance, preferences, user setting, transmittance, a travel destination URL, and travel destination coordinates.

The avatar age is the information that corresponds to the virtual age of a user, and that can be used for switching between displaying and undisplaying of a candidate travelable space. For example, a candidate travelable space may be controlled so as to be displayed when the avatar age of the user information is equal to or more than the avatar age of the travelable space information, and not to be displayed otherwise. Accordingly, the candidate travelable space can be appropriately presented according to the avatar age of the user.

The actual age is the information that corresponds to the actual age of the user, and that can be used for switching between displaying and undisplaying of a candidate travelable space. For example, a candidate travelable space may be controlled so as to be displayed when the actual age of the user information is equal to or more than the actual age of the travelable space information, and not to be displayed otherwise. Accordingly, the candidate travelable space can be appropriately presented according to the actual age of the user.

It should be noted that there may be a mechanism for switching between referencing the avatar age and the actual age in determination of displaying or undisplaying of a candidate travelable space. For example, the avatar age and the actual age may be switched according to the location in the virtual space. Specifically, when the user is staying at, for example, a hotel in the virtual space, or the like, in a general area in the hotel, displaying or undisplaying of a candidate travelable space may be determined according to the avatar age. In addition, in an area such as a casino in the hotel, displaying or undisplaying of a candidate travelable space may be determined according to the actual age.

In this manner, according to the scene or the location, whether to reference the avatar age or the actual age may be switched in determination of displaying or undisplaying of a candidate travelable space. Accordingly, the virtual space that can protect users can be provided.

The participation eligibility is the eligibility that is given to the user, and is the information that can be used for switching between displaying and undisplaying of a candidate travelable space. For example, a candidate travelable space may be controlled so as to be displayed when the participation eligibility of the user information is included in the participation eligibility of the travelable space information, and not to be displayed otherwise.

Specifically, the displaying of a candidate travelable space may be switched according to whether the user has purchased a ticket to travel to the candidate travelable space and has obtained the participation eligibility. Accordingly, the candidate travelable space can be appropriately presented according to the participation eligibility of the user.

It should be noted that the participation eligibility may be eligibility that is virtually given as a virtual attribute of the user in the virtual space, or may be eligibility that is actually given as an actual attribute of the user in the real world.

The device processing performance is the processing performance of terminal 101 of the user and the like, and is the information that can be used for switching between displaying and undisplaying of a candidate travelable space. For example, a candidate travelable space may be controlled so as to be displayed when the device processing performance of the user information is equal to or more than the device processing performance of the travelable space information, and not to be displayed otherwise. More specifically, the displaying of a candidate travelable space may be switched according to the device processing performance of the user.

Accordingly, the candidate travelable space can be appropriately presented according to the device processing performance of the user. That is, the user can be prevented from traveling to a space having an amount of information that is difficult for the device of the user to process. It should be noted that the device processing performance may correspond to the actual attribute of the user in the real world.

The preferences are the preferences of the user, and are the information that can be used for switching between displaying and undisplaying of a candidate travelable space. For example, a candidate travelable space may be controlled so as to be displayed when the preferences of the user information are included in the preferences of the travelable space information, and not to be displayed otherwise. Specifically, the displaying of a candidate travelable space may be switched according to whether the user is interested in the candidate travelable space.

Accordingly, the candidate travelable space may be appropriately presented according to the preferences of the user. Therefore, it becomes possible to prevent displaying of a candidate travelable space that does not match the preferences of the user. It should be noted that the preferences may be the virtual preferences of the user in the virtual space, or may be the actual preferences of the user in the real world.

The user setting is the setting performed by the user, and is the information that can be used for switching between displaying and undisplaying of a candidate travelable space. For example, a candidate travelable space may be controlled so as to be displayed when the user setting of the user information is included in the user setting of the travelable space information, and not to be displayed otherwise.

Specifically, a candidate travelable space the displaying of which is permitted or prohibited in advance by the user is set as the user setting. In addition, the candidate travelable space the displaying of which is permitted by the user is controlled to be displayed, and the candidate travelable space the displaying of which is prohibited by the user is controlled not to be displayed. In addition, accordingly, the displaying of the candidate travelable space is switched according to the user setting. Therefore, accordingly, the candidate travelable space can be appropriately presented according to the user setting.

It should be noted that the user setting may be the information that is set as a virtual attribute of the user in the virtual space, or may be the information that is set as an actual attribute of the user in the real world.

The transmittance is the information that can be used for displaying of a candidate travelable space. For example, the value of the transmittance may be a numerical value from 0 to 99, the transmittance with a value of 0 may indicate no transmission, and the transmittance with a value of 99 may indicate full transmission. Accordingly, for example, when a candidate travelable space is displayed, the value of the transmittance is set to 0, and when the candidate travelable space is not displayed, the value of the transmittance is set to 99. Accordingly, displaying and undisplaying of the candidate travelable space can be switched.

The travel destination URL is the URL indicating the travel destination corresponding to a candidate travelable space. For example, in a case where, when the user travels to a candidate travelable space, the door corresponding to the candidate travelable space is opened, the virtual space information after traveling may be obtained from the travel destination URL, and the virtual space may be displayed. Accordingly, it becomes possible to efficiently travel in the virtual space according to the travel destination URL.

The travel destination coordinates are the coordinates that indicate the travel destination corresponding to a candidate travelable space. For example, in a case where, when the user travels to a candidate travelable space, the door corresponding to the candidate travelable space is opened, the position of the user may be moved (warped) to the position of the travel destination coordinates, and the visual field seen from the position may be displayed. Accordingly, it becomes possible to efficiently travel in the virtual space according to the travel destination coordinates.

Whether a candidate travelable space satisfies a condition is determined by using the user information and the travelable space information. Then, when the candidate travelable space satisfies the condition, a 3D object for traveling is displayed to the user, and when the candidate travelable space does not satisfy the condition, the 3D object for traveling need not be displayed to the user.

For example, in the determination processing of a candidate travelable space, the travelable space information (for example, the avatar age) and the user information (for example, the avatar age) corresponding to the travelable space information are obtained. Then, when the user information indicates a value within the range that is set by the travelable space information, it may be determined that the condition is satisfied, and when the user information indicates a value outside the range that is set by the travelable space information, it may be determined that the condition is not satisfied.

It should be noted that the condition being satisfied may be that all of the plurality of conditions corresponding to a plurality of items included in the travelable space information are satisfied, or may be that at least one condition of the plurality of conditions is satisfied.

In addition, for example, in the determination processing, whether the travelable space information has a condition may be determined. When the travelable space information has a condition, the travelable space information is compared with the user information to determine whether the condition is satisfied. When the travelable space information does not have a condition, it may be determined that the condition is satisfied, without referring to the user information.

In addition, items that may take any values need not have conditions. In addition, in the travelable space information, items to which values are not set may indicate that there is no condition. In addition, a value indicating that there is no condition may be set to items with no condition.

FIG. 17 is a syntax diagram illustrating an example of syntax elements related to the display control processing for a candidate 3D object according to the present embodiment.

For example, displaying and undisplaying of a candidate 3D object may be switched by comparing the 3D object information with the user information. Accordingly, an appropriate 3D object can be provided for each user. In addition, the 3D object information can include, as information, an avatar age, an actual age, participation eligibility, device processing performance, preferences, user setting, transmittance, a content type, and object data (3D object data). The 3D object information may be represented as candidate 3D object information, candidate three-dimensional object information, or the like.

The avatar age is the information that corresponds to the virtual age of the user, and that can be used for switching between displaying and undisplaying of a candidate 3D object. For example, a candidate 3D object may be controlled so as to be displayed when the avatar age of the user information is equal to or more than the avatar age of the 3D object information, and not to be displayed otherwise. Accordingly, the candidate 3D object can be appropriately presented according to the avatar age of the user.

The actual age is the information that corresponds to the actual age of the user, and that can be used for switching between displaying and undisplaying of a candidate 3D object. For example, a candidate 3D object may be controlled so as to be displayed when the actual age of the user information is equal to or more than the actual age of the 3D object information, and not to be displayed otherwise. Accordingly, the candidate 3D object can be appropriately presented according to the actual age of the user.

It should be noted that there may be a mechanism for switching between referencing the avatar age and the actual age in determination of displaying or undisplaying of a candidate 3D object. For example, the avatar age and the actual age may be switched according to the type of a candidate 3D object. Specifically, for example, displaying or undisplaying of a general candidate 3D object, such as a building or equipment in the virtual space, may be determined according to the avatar age, and displaying or undisplaying of a candidate 3D object related to an advertisement may be determined according to the actual age.

In this manner, according to the type of a candidate 3D object, the scene or the location, whether to reference the avatar age or the actual age may be switched in determination of displaying or undisplaying of a candidate 3D object. Accordingly, the virtual space that can protect users can be provided.

The participation eligibility is the eligibility that is given to the user, and is the information that can be used for switching between displaying and undisplaying of a candidate 3D object. For example, a candidate 3D object may be controlled so as to be displayed when the participation eligibility of the user information is included in the participation eligibility of the 3D object information, and not to be displayed otherwise.

Specifically, the displaying of a candidate 3D object may be switched according to whether the user has purchased a ticket to view the candidate 3D object and has obtained the participation eligibility. Accordingly, the candidate 3D object can be appropriately presented according to the participation eligibility of the user.

It should be noted that the participation eligibility may be the eligibility that is virtually given as a virtual attribute of the user in the virtual space, or may be the eligibility that is given in reality as an actual attribute of the user in the real world.

The device processing performance is the processing performance of terminal 101 of the user and the like, and is the information that can be used for switching between displaying and undisplaying of a candidate 3D object. For example, a candidate 3D object may be controlled so as to be displayed when the device processing performance of the user information is equal to or more than the device processing performance of the 3D object information, and not to be displayed otherwise. More specifically, the displaying of a candidate 3D object may be switched according to the device processing performance of the user.

Accordingly, the candidate 3D object can be appropriately presented according to the device processing performance of the user. That is, it is possible to prevent the processing of displaying a candidate 3D object having an amount of information that is difficult for the device of the user to process, for example, the processing of decoding a candidate 3D object, from being performed. It should be noted that the device processing performance may correspond to an actual attribute of the user in the real world.

The preferences are the preferences of the user, and are the information that can be used for switching between displaying and undisplaying of a candidate 3D object. For example, a candidate 3D object may be controlled so as to be displayed when the preferences of the user information are included in the preferences of the 3D object information, and not to be displayed otherwise. Specifically, the displaying of a candidate 3D object may be switched according to whether the user is interested in the candidate 3D object.

Accordingly, the candidate 3D object can be appropriately presented according to the preferences of the user. Therefore, it becomes possible to prevent displaying of a candidate 3D object that does not match the preferences of the user. It should be noted that the preferences may be the virtual preferences of the user in the virtual space, or may be the actual preferences of the user in the real world.

The user setting is the setting performed by the user, and is the information that can be used for switching between displaying and undisplaying of a candidate 3D object. For example, a candidate 3D object may be controlled so as to be displayed when the user setting of the user information is included in the user setting of the 3D object information, and not to be displayed otherwise.

Specifically, a candidate 3D object the displaying of which is permitted or prohibited in advance by the user is set as the user setting. In addition, the candidate 3D object the displaying of which is permitted by the user is controlled to be displayed, and the candidate 3D object the displaying of which is prohibited by the user is controlled not to be displayed. In addition, accordingly, the displaying of the candidate 3D object is switched according to the user setting. Therefore, accordingly, the candidate 3D object can be appropriately presented according to the user setting.

It should be noted that the user setting may be the information that is set as a virtual attribute of the user in the virtual space, or may be the information that is set as an actual attribute of the user in the real world.

The transmittance is the information that can be used for displaying of a candidate 3D object. For example, the value of the transmittance may be a numerical value from 0 to 99, the transmittance with a value of 0 may indicate no transmission, and the transmittance with a value of 99 may indicate full transmission. Accordingly, for example, when a candidate 3D object is displayed, the value of the transmittance is set to 0, and when the candidate 3D object is not displayed, the value of the transmittance is set to 99. Accordingly, displaying and undisplaying of the candidate 3D object can be switched.

The codec type may indicate the encoding scheme of object data of a candidate 3D object. For example, the encoding standard standardized by MPEG or the like may be indicated. Accordingly, server 100 or terminal 101 can refer to the codec type to determine whether the data of a candidate 3D object can be decoded. In addition, when the candidate 3D object is decoded when it can be decoded, and need not be decoded otherwise. Accordingly, the processing amount can be reduced.

The object data is the data of a candidate 3D object. The object data may be the data encoded with the encoding standard standardized by MPEG or the like, or may be uncompressed data. Accordingly, for example, when reduction of the data capacity of the entire virtual space is requested, the object data is accumulated as encoded data, and when saving of data that is close to the original data is requested, the object data is accumulated as uncompressed data. Accordingly, the capacity and the accuracy can be balanced.

Whether a candidate 3D object satisfies a condition is determined by using the user information and the 3D object information. Then, when the candidate 3D object satisfies the condition, the object data of the candidate 3D object is decoded, and the candidate 3D object is displayed. On the other hand, when the candidate 3D object does not satisfy the condition, the object data of the candidate 3D object need not be decoded.

For example, in the determination processing of a candidate 3D object, the 3D object information (for example, the avatar age) and the user information (for example, avatar age) corresponding to the 3D object information are obtained. Then, when the user information indicates a value within the range that is set by the 3D object information, it may be determined that the condition is satisfied, and when the user information indicates a value outside the range that is set by the 3D object information, it may be determined that the condition is not satisfied. Accordingly, the processing amount for decoding the object data of the candidate 3D object can be reduced.

It should be noted that the condition being satisfied may be that all of the plurality of conditions corresponding to a plurality of items included in the 3D object information are satisfied, or may be that at least one condition of the plurality of conditions is satisfied.

In addition, for example, in the determination processing, whether the 3D object information has a condition may be determined. When the 3D object information has a condition, the 3D object information may be compared with the user information to determine whether the condition is satisfied. When the 3D object information does not have a condition, it may be determined that the condition is satisfied, without referring to the user information.

In addition, items that may take any values need not have conditions. In addition, in the 3D object information, items to which values are not set may indicate that there is no condition. In addition, a value indicating that there is no condition may be set to items with no condition.

It should be noted that the object data may be decoded before the determination processing. In addition, when the condition is not satisfied, the transmittance of the 3D object information may be set to 100% (full transmission). Accordingly, the candidate 3D object cannot be seen by the user. On the other hand, when the condition is satisfied, since the object data is already decoded, the processing time for displaying can be reduced.

In addition, when the condition is not satisfied, the candidate 3D object may be controlled so as not to be transmitted to terminal 101 of the user. Accordingly, the communication band can be reduced. In addition, when the condition is satisfied, the object data may be controlled to be received from server 100. Accordingly, the communication band can be reduced. That is, since only the candidate 3D object that satisfies the condition is transmitted and received, the communication band can be reduced.

In addition, a candidate 3D object related to an advertisement may be controlled so as to be displayed when the avatar age of the user information is equal to or more than the avatar age of the 3D object information, and not to be displayed otherwise. Accordingly, the advertisement can be appropriately presented according to the avatar age of the user.

In addition, whether to use the avatar age or to use the actual age for the determination processing of displaying may be switched according to the type of an advertisement. For example, the avatar age may be used for the determination processing for an advertisement related to fashion, and the actual age may be used for the determination processing for an advertisement related to alcohol. Accordingly, advertisement presentation that can protect users can be performed.

In addition, for a candidate 3D object such as an advertisement, the candidate 3D object for an avatar and the candidate 3D object for an actual person may be defined, and each of these candidate 3D objects may be identified by an identifier.

In addition, the information related to an avatar and the information related to an actual person may be added to the user information. Accordingly, for example, when the user participates in the virtual space as an avatar, the display determination of a candidate 3D object, such as an advertisement for avatars, may be performed by using the avatar information of the user. On the other hand, when the user participates in the virtual space as an actual person, the display determination of a candidate 3D object, such as an advertisement for actual persons, may be performed by using the information on the actual person of the user.

Accordingly, a candidate 3D object, such as an advertisement, can be appropriately displayed according to whether the user participates in the virtual space as an avatar or as an actual person.

FIG. 18 is a syntax diagram illustrating an example of syntax elements related to users and avatars according to the present embodiment. As in this example, the user information and the avatar information may be separately managed. In addition, a plurality of avatars may be used by the same user. In addition, the same avatar may be shared by a plurality of users.

Specifically, in this example, first user information is associated with first avatar information and second avatar information. Therefore, a first user can use a first avatar and a second avatar. In addition, accordingly, the user information need not be held for each avatar, and the data amount can be reduced.

In addition, in this example, the second avatar information is associated with the first user information and the second user information. Therefore, the first user and the second user can use the second avatar. In addition, accordingly, the avatar information need not be held for each user, and the data amount can be reduced.

In addition, for example, in a case where the second avatar is shared by the first user and the second user, when displaying or undisplaying of a candidate 3D object, such as an advertisement, is determined by using the avatar age, the candidate 3D object is displayed in the same manner to the first user and the second user. On the other hand, in a case where displaying or undisplaying of a candidate 3D object, such as an advertisement, is determined by using the actual age, even when the same second avatar is used, the candidate 3D objects that match the respective actual ages of the first user and the second user can be displayed.

Accordingly, even when the same avatar is shared, an appropriate candidate 3D object and an appropriate candidate travelable space according to the actual age of the user can be presented. Therefore, the virtual space that can protect users can be provided.

In addition, for example, in a case where the first user uses the first avatar and the second avatar, when displaying or undisplaying of a candidate 3D object, such as an advertisement, is determined by using the avatar age, the display is different depending on whether the first user is using the first avatar or the second avatar. On the other hand, in a case where displaying or undisplaying of a candidate 3D object, such as an advertisement, is determined by using the actual age, a candidate 3D object that matches the actual age of the first user can be displayed, irrespective of which avatar is used by the first user.

Accordingly, even when the same user uses a plurality of avatars, an appropriate candidate 3D object and an appropriate candidate travelable space according to the actual age of the user can be presented. Therefore, the virtual space that can protect users can be provided.

It should be noted that, in the present embodiment, the example has been illustrated in which displaying of a candidate travelable space and a candidate 3D object is switched based on the avatar age or actual age of the user information. However, the switching of the display is not necessarily limited to such an example, and the display may be switched based on, for example, both the avatar age and the actual age.

For example, a candidate 3D object may be controlled so as to be displayed when the avatar age of the user is equal to or more than the avatar age of the 3D object information and the actual age of the user is equal to or more than the actual age of the 3D object information, and not to be displayed otherwise. Accordingly, the candidate 3D object, such as an advertisement, can be appropriately presented according to the avatar age and actual age of the user.

It should be noted that, regarding a candidate 3D object of an advertisement, whether the avatar age is to be used, the actual age is to be used, or both of these are to be used for the determination processing of displaying may be switched according to the type of the advertisement. For example, the display may be determined by using the avatar age for an advertisement related to fashion, by using the actual age for an advertisement related to alcohol, and using both the avatar age and the actual age for a candidate travelable space that is a casino.

For example, a condition may be switched by using the information that is set to either or both of the actual age and avatar age of the 3D object information. Alternatively, usage information indicating which of the actual age and the avatar age is to be used may be added to the 3D object information. In addition, the actual age and/or the avatar age may be used based on the usage information. Accordingly, a candidate 3D object or a candidate travelable space suitable for the actual age of the user, the avatar age of the user, or both can be presented.

In an aspect of the present embodiment, the method is disclosed in which the authenticated information and the information that is set by the user are obtained, whether the condition is satisfied is determined, and the display or processing is switched based on the determination result. In the determination of whether the condition is satisfied, which of the authenticated information and the information that is set by the user is to be used may be switched.

In an aspect of the present embodiment, the actual age and avatar age of the user in the virtual space are obtained. In addition, whether the condition indicating age restrictions is satisfied is determined. Then, the display or processing is switched based on the determination result. In addition, in the determination of whether the condition is satisfied, which of the actual age and avatar age of the user is to be used is switched.

In an aspect of the present embodiment, the user information on a user who utilizes a virtual space and the information on a plurality of users who utilize the virtual space are obtained. Then, whether the condition is satisfied is determined. Then, the display or processing is switched based on the determination result. In addition, in the determination of whether the condition is satisfied, which of the user information of the user who utilizes the virtual space and the information of the plurality of users who utilize the virtual space is to be used is switched.

The switching of the display may be that, for example, a first object is displayed when the condition is satisfied, and the first object is not displayed when the condition is not satisfied. Alternatively, the switching of the display may be that, for example, the first object is displayed when the condition is satisfied, and a second object is displayed when the condition is not satisfied.

The switching of the processing may be switching of whether or not travel is possible, switching of operations to be performed, switching of destinations, changing of the transmittance of an object, and the like.

A plurality of display modes may be switched, a plurality of processing modes may be switched, or both the plurality of display modes and the plurality of processing modes may be switched, based on a plurality of conditions.

In an aspect of the present embodiment, a first parameter of an avatar of a user and a second parameter of the user himself/herself are obtained. Then, whether to use the first parameter or the second parameter in determination is switched.

Here, the first parameter and the second parameter are, for example, the same type of information. In addition, the ranges of values that can be set for the first parameter and the second parameter may at least partially overlap. In addition, the first parameter and the second parameter may be parameters the index values of which are set according to the same table. In addition, the first parameter may indicate the age that is set to the avatar, and the second parameter may indicate the age of the user.

For example, the first parameter and the second parameter correspond to the same attribute or the same type of attribute, have the same format, and have, for example, similar values. Therefore, which parameter is to be used in determination can be appropriately switched.

Here, the parameter to be used for determination may be switched, according to an argument that is input when calling a function. For example, when the information on an avatar, such as the age that is set to the avatar, is used as an argument of a function that includes determination, the determination may be performed by using the first parameter. In addition, when the information on the user himself/herself is used as an argument of a function that includes determination, the determination may be performed by using the second parameter.

With the above-described operation, it becomes possible to switch whether to use the first parameter or the second parameter for determination, while commonizing the function for the determination.

In addition, in the above-described operation, when the display or processing of an object is switched based on the determination result, the information used as the argument of the above-described function may be included and saved in the control information or attribute information corresponding to each object. Accordingly, it becomes possible for an administrator or a creator who generates an object to set which of the first parameter and the second parameter is to be used for the determination of displaying and processing of the object.

Here, the display method of the object may be switched based on the determination result. In addition, whether to perform specified processing may be switched based on the determination result.

It should be noted that, in the above, the first parameter is the parameter of the avatar, and the second parameter is the parameter of the user himself/herself. However, the first parameter and the second parameter may be a combination of the other parameters.

For example, the first parameter may be the parameter of the first user for joining a specific virtual space. In addition, the second parameter may be the parameter of the second user in each of a plurality of virtual spaces. More specifically, the second user may be, for example, a user in another service used for authentication of the first user.

### [Typical example]

FIG. 19 is a block diagram illustrating a configuration example of the information processing device according to this embodiment. Information processing device 800 illustrated in FIG. 19 includes one or more processors 801 and one or more memories 802. Information processing device 800 may be a single device or may be formed by a plurality of devices. Information processing device 800 may be expressed as an information processing system.

Specifically, information processing device 800 may be included in terminal 101, server 100, first server 701, or second server 702. Alternatively, information processing device 800 may include terminal 101, server 100, first server 701, or second server 702.

Each of one or more processors 801 is a circuit that performs information processing. For example, processor 801 may correspond to a processor included in any of terminal 101, server 100, first server 701, or second server 702.

Here, an operation performed by one or more processors 801 is performed by at least one of one or more processors 801. That is, an operation performed by one or more processor 801 may be performed by one processor 801, or performed by a plurality of processors 801 cooperating with each other, or performed by each of a plurality of processors 801.

Each of one or more memories 802 is a volatile or nonvolatile memory that stores information. For example, processor 801 may correspond to a memory included in any of terminal 101, server 100, first server 701, and second server 702.

Here, information stored in one or more memories 802 is stored in at least one of one or more memories 802. That is, information stored in one or more memories 802 may be stored in one memory 802, stored in a plurality of memories 802 cooperating with each other, or stored in each of a plurality of memories 802.

One or more processors 801 can access one or more memories 802. That is, at least one processor 801 can access at least one memory 802. One or more processors 801 operate using one or more memories 802. One or more memories 802 store information for operation of one or more processors 801.

Furthermore, one or more memories 802 may store a program for operation of one or more processors 801. Furthermore, one or more memories 802 may store information to be subjected to information processing by one or more processors 801 or information subjected to information processing by one or more processors 801.

FIG. 20 is a flowchart illustrating a first operation example of information processing device 800. Specifically, one or more processors 801 of information processing device 800 perform the operation illustrated in FIG. 20.

In the example in FIG. 20, first, one or more processors 801 determine whether a candidate travelable space, which is a candidate space that a user can travel to in a virtual space, satisfies a condition (S701). Then, one or more processors 801 control whether to present the candidate travelable space in the virtual space, according to a result of the determining of whether the candidate travelable space satisfies the condition (S702).

Accordingly, there are cases where a candidate travelable space that satisfies the condition can be presented in the virtual space without presenting a candidate travelable space that does not satisfy the condition. In other words, there are cases where a virtual space that is suitable for the condition can be provided. Furthermore, there are cases where the candidate travelable space to be presented can be limited according to the condition. Therefore, there are cases where the number of candidate travelable spaces to be presented can be reduced, and thus candidate travelable spaces can be presented efficiently.

For example, one or more processors 801 may determine whether the candidate travelable space satisfies the condition using a virtual attribute of the user in the virtual space. Accordingly, there are cases where a candidate travelable space that is suitable for the virtual attribute of the user can be presented without presenting a candidate travelable space that is not suitable for the virtual attribute of the user. Therefore, there are cases where a virtual space that is suitable for the virtual attribute of the user can be provided.

Furthermore, for example, the virtual attribute of the user may be a virtual age of the user. Accordingly, there are cases where a candidate travelable space that is suitable for the virtual age of the user can be presented without presenting a candidate travelable space that is not suitable for the virtual age of the user. Therefore, there are cases where a virtual space that is suitable for the virtual age of the user can be provided.

Furthermore, for example, one or more processors 801 may determine whether the candidate travelable space satisfies the condition using a real attribute of the user in a real world.

Accordingly, there are cases where a candidate travelable space that is suitable for the real attribute of the user can be presented without presenting a candidate travelable space that is not suitable for the real attribute of the user. Therefore, there are cases where a virtual space that is suitable for the real attribute of the user can be provided.

Furthermore, for example, the real attribute of the user may be a real age of the user. Accordingly, there are cases where a candidate travelable space that is suitable for the real age of the user can be presented without presenting a candidate travelable space that is not suitable for the real age of the user. Therefore, there are cases where a virtual space that is suitable for the real age of the user can be provided.

Furthermore, for example, one or more processors 801 may select one attribute from either a virtual attribute of the user in the virtual space or a real attribute of the user in a real world. Then, one or more processors 801 may determine whether the candidate travelable space satisfies the condition using the one attribute selected.

Accordingly, there are cases where whether the condition is satisfied is determined by switching between a virtual attribute of the user and a real attribute of the user according to a usage state, and so on, and thus a candidate travelable space that is suitable for the condition can be provided. Therefore, are cases where it is possible to switch between a virtual space that is suitable for the virtual attribute of the user and a virtual space that is suitable for the real attribute of the user, according to the usage state, and so on.

Furthermore, for example, one or more processors 801 may determine whether the candidate travelable space satisfies the condition and control whether to present the candidate travelable space per multi-user unit consisting of a plurality of users including the user. Accordingly, there are cases where whether to present a candidate travelable space can be switched per multi-user unit consisting of a plurality of users. Therefore, there are cases where a common candidate travelable space can be provided to a plurality of users.

Furthermore, for example, one or more processors 801 may obtain candidate travelable space information to which condition information has been added may be obtained, the candidate travelable space information indicating the candidate travelable space, the condition information indicating the condition. Then, one or more processors 801 may determine whether the candidate travelable space satisfies the condition according to the condition information added to the candidate travelable space information. Accordingly, there are cases where it is possible to efficiently determine whether a candidate travelable space satisfies the condition, and efficiently present the candidate travelable space.

FIG. 21 is a flowchart illustrating a second operation example of information processing device 800. Specifically, one or more processors 801 of information processing device 800 perform the operation illustrated in FIG. 21.

In the example in FIG. 21, first, one or more processors 801 determine whether a candidate three-dimensional object, which is a candidate three-dimensional object to be presented to a user in a virtual space, satisfies a condition (S801). Then, one or more processors 801 control whether to present the candidate three-dimensional object in the virtual space, according to a result of the determining of whether the candidate three-dimensional object satisfies the condition (S802).

Accordingly, there are cases where a candidate three-dimensional object that satisfies the condition can be presented in the virtual space without presenting a candidate three-dimensional object that does not satisfy the condition. In other words, there are cases where a virtual space that is suitable for the condition can be provided. Furthermore, there are cases where the candidate three-dimensional object to be presented can be limited according to the condition. Therefore, there are cases where the number of candidate three-dimensional objects to be presented can be reduced, and thus candidate three-dimensional objects can be presented efficiently.

For example, one or more processors 801 may determine whether the candidate three-dimensional object satisfies the condition using a virtual attribute of the user in the virtual space. Accordingly, there are cases where a candidate three-dimensional object that is suitable for the virtual attribute of the user can be presented without presenting a candidate three-dimensional object that is not suitable for the virtual attribute of the user. Therefore, there are cases where a virtual space that is suitable for the virtual attribute of the user can be provided.

Furthermore, for example, the virtual attribute of the user may be a virtual age of the user. Accordingly, there are cases where a candidate three-dimensional object that is suitable for the virtual age of the user can be presented without presenting a candidate three-dimensional object that is not suitable for the virtual age of the user. Therefore, there are cases where a virtual space that is suitable for the virtual age of the user can be provided.

Furthermore, for example, one or more processors 801 may determine whether the candidate three-dimensional object satisfies the condition using a real attribute of the user in a real world. Accordingly, there are cases where a candidate three-dimensional object that is suitable for the real attribute of the user can be presented without presenting a candidate three-dimensional object that is not suitable for the real attribute of the user. Therefore, there are cases where a virtual space that is suitable for the real attribute of the user can be provided.

Furthermore, for example, the real attribute of the user may be a real age of the user. Accordingly, there are cases where a candidate three-dimensional object that is suitable for the real age of the user can be presented without presenting a candidate three-dimensional object that is not suitable for the real age of the user. Therefore, there are cases where a virtual space that is suitable for the real age of the user can be provided.

Furthermore, for example, one or more processors 801 may select one attribute from either a virtual attribute of the user in the virtual space or a real attribute of the user in a real world. One or more processors 801 may determine whether the candidate three-dimensional object satisfies the condition using the one attribute selected.

Accordingly, there are cases where whether the condition is satisfied is determined by switching between a virtual attribute of the user and a real attribute of the user according to a usage state, and so on, and thus a candidate travelable space that is suitable for the condition can be provided. Therefore, are cases where it is possible to switch between a virtual space that is suitable for the virtual attribute of the user and a virtual space that is suitable for the real attribute of the user, according to the usage state, and so on.

Furthermore, for example, one or more processors 801 may determine whether the candidate three-dimensional object satisfies the condition and control whether to present the candidate three-dimensional object per multi-user unit consisting of a plurality of users including the user. Accordingly, there are cases where whether to present a candidate three-dimensional object can be switched per multi-user unit consisting of a plurality of users. Therefore, there are cases where a common candidate travelable space can be provided to a plurality of users.

Furthermore, for example, one or more processors 801 may select one unit from either a single-user unit consisting of the user or a multi-user unit consisting of a plurality of users including the user. Then, one or more processors 801 may determine whether the candidate three-dimensional object satisfies the condition and control whether to present the candidate three-dimensional object per the one unit selected.

Accordingly, there are cases where it is possible to determine whether the candidate three-dimensional object satisfies the condition and control whether to present the candidate three-dimensional object by switching between a single-user unit consisting of the user and a multiple-user unit consisting of a plurality of users, according to the usage state, and so on. Therefore, there are cases where it is possible to switch between providing a virtual space individually to a user and providing a common virtual space to a plurality of users.

Furthermore, for example, one or more processors 801 may obtain candidate three-dimensional object information to which condition information has been added, the candidate three-dimensional object information indicating the candidate three-dimensional object, the condition information indicating the condition. Then, one or more processors 801 may determine whether the candidate three-dimensional object satisfies the condition according to the condition information added to the candidate three-dimensional object information.

Accordingly, there are cases where it is possible to efficiently determine whether a candidate three-dimensional object satisfies the condition, and efficiently present the candidate three-dimensional object.

Furthermore, for example, one or more processors 801 may control whether to present the candidate three-dimensional object in the virtual space in a first mode, according to the result of the determining.

Then, one or more processors 801 may present the candidate three-dimensional object in the virtual space in the first mode, when the candidate three-dimensional object is determined to satisfy the condition. Furthermore, one or more processors 801 may present the candidate three-dimensional object in the virtual space in a second mode different from the first mode, without presenting the candidate three-dimensional object in the virtual space in the first mode, when the candidate three-dimensional object is determined not to satisfy the condition.

Accordingly, there are cases where, in the virtual space, a candidate three-dimensional object that satisfies the condition can be presented in the first mode, and a candidate three-dimensional object that does not satisfy the condition can be presented in the second mode. Therefore, there are cases where a virtual space that is suitable for the condition can be provided.

Furthermore, for example, one or more processors 801 may perform the above described operation as an operation of terminal 101, server 100, first server 701, or second server 702.

In addition, for example, information processing device 800 may be included in terminal 101. In addition, one or more processors 801 may obtain, from server 100, the candidate travelable space information that indicates a candidate travelable space, or the candidate three-dimensional object information that indicates a candidate three-dimensional object. Then, one or more processors 801 may determine whether the candidate travelable space or the candidate three-dimensional object satisfies a condition. Then, when the condition is satisfied, one or more processors 801 may present the candidate travelable space or the candidate three-dimensional object.

In addition, for example, information processing device 800 may be included in server 100. In addition, one or more processors 801 may determine whether a candidate travelable space or a candidate three-dimensional object satisfies a condition. Then, when the condition is satisfied, one or more processors 801 may present the candidate travelable space or the candidate three-dimensional object via terminal 101.

In addition, the virtual attribute of the user and the actual attribute of the user may also be simply represented as the attributes of the user. The attributes of the user may be physical attributes, such as the age and height of the user. In addition, the attributes of the user may be the attributes related to user's property, or may be the attributes related to the career of the user.

### [Other examples]

Application software for executing processes related to the terminal and the server in the present disclosure may be provided by a software distribution server. Then, the application software may be installed in the terminal and the server. In addition, the terminal and the server may achieve the roles described in the present disclosure by executing the processes related to the terminal and the server in the present disclosure according to the application software.

It should be noted that the application software may be provided to the terminal and the server via another device by way of the other device connecting to the software distribution server via a network.

It should be noted that aspects such as the system, device, and method are not limited to the foregoing description, and the aspects such as the system, the device, and the method in the foregoing description may be implemented by making modifications to the foregoing description. For example, at least a portion of each of the aspects may be implemented by software, or by dedicated hardware, or a combination of hardware and software.

Furthermore, for example, a program for executing the various processes described in the present disclosure may be stored in advance in a Read Only Memory (ROM). Then the processes may be executed by way of the program being executed by a CPU.

Furthermore, the program for executing the various processes described in the present disclosure may be stored in a computer-readable storage medium. In addition, the program stored in the storage medium may be read from a Random Access Memory (RAM) of the computer. Then, the computer may operate according to the program.

Furthermore, each of the above-described components may typically be implemented as a Large Scale Integration (LSI) which is an integrated circuit. They may take the form of individual chips, or one or more or all of the components may be encapsulated into a single chip. Although the integrated circuit is referred to as the LSI here, the integrated circuit may be referred to as an integrated circuit IC, a system LSI, a super LSI, or an ultra LSI depending on the scale of integration.

Moreover, the method of implementation of the components using an integrated circuit is not limited to application of an LSI. The components may be implemented by a dedicated circuit or a general-purpose processor. A programmable logic device (PLD) or a field programmable gate array (FPGA) that can be programmed after the LSI is manufactured may be used. Alternatively, a reconfigurable processor in which connection and setting of circuit cells in an LSI can be reconfigured may be used.

It should be noted that all or some of the software for executing the method described in the present disclosure may be executed by being obtained by wireless communication or wired communication by at least one of the FPGA or the CPU.

For example, the terminal or the server described in the present disclosure includes at least one of an FPGA or a CPU, and may include a communication IF for obtaining, from the outside, software for causing the at least one of the FPGA or the CPU to operate. In addition, the terminal or the server may include a storage medium for storing the obtained software, and the method described in the present application may be implemented by at least one of the terminal or the server operating based on the stored software.

In addition, when a circuit integration technology that replaces LSIs comes along owing to advances in semiconductor technology or to a separate derivative technology, the components should understandably be integrated using that technology. There can be a possibility of adaptation of biotechnology, for example.

In the present disclosure, terms such as "...er(unit)" used to denote the respective components may be substituted by other terms such as "...device" or "...module".

Furthermore, in the foregoing description, processes executed by a specific component may be executed by another component in place of the specific component. Moreover, the order of processes may be changed or processes may be executed in parallel. Furthermore, ordinal numbers such as first and second used in the description may be interchanged, eliminated, or re-assigned as appropriate. These ordinal numbers may be used for identifying components without necessarily corresponding to any meaningful order.

Furthermore, for example, expressions such as at least one (or one or more) of a first component, a second component, or a third component corresponds to the first component, the second component, the third component, or any combination thereof.

Moreover, the respective components may be implemented as dedicated hardware or may be realized by executing a software program suited to the respective components. The respective components may be implemented by a program executor such as a CPU or a processor reading out and executing the software program recorded on a recording medium such as a hard disk or a semiconductor memory.

For example, the above-described program causes a computer to execute an information processing method including: determining whether a candidate travelable space, which is a candidate space that a user is capable of traveling to in a virtual space, satisfies a condition; and controlling, according to a result of the determining of whether the candidate travelable space satisfies the condition, whether to present the candidate travelable space in the virtual space.

Alternatively, the above-described program may cause a computer to execute an information processing method including: determining whether a candidate three-dimensional object, which is a candidate three-dimensional object to be presented to a user in a virtual space, satisfies a condition; and controlling, according to a result of the determining of whether the candidate three-dimensional object satisfies the condition, whether to present the candidate three-dimensional object in the virtual space.

Although a device, and so on, according to one or more aspects has been described above based on exemplary embodiments, the aspects of the device, and so on, are not limited to the foregoing embodiments. So long as they do not depart from the essence of the present disclosure, various modifications to the embodiments that can be conceived by those skilled in the art may be implemented, and different aspects may be combined.

### [Industrial Applicability]

The present disclosure can be applied to any one or more of a server, a terminal, a communication device, a sensor device, a household appliance, or an electronic device.

### [Reference Signs List]

- 100: server
- 101: terminal
- 111, 121: terminal IF
- 112, 122: terminal controller
- 200, 500: information processing unit
- 201: content manager
- 202: user manager
- 203: coordination manager
- 300, 600, 801: processor
- 301, 601, 802: memory
- 302, 602: communication IF
- 401: AP server
- 402: content management server
- 403: user management server
- 404: session management server
- 405: content DB
- 406: user DB
- 407: user synchronization server
- 408: audio call management server
- 501: storage
- 502: communication unit
- 503: space modeling unit
- 504: output unit
- 505: input unit
- 603: input IF
- 604: video signal processing unit
- 605: audio signal processing unit
- 606: sensor
- 701: first server
- 702: second server
- 800: information processing device

## Claims

1. An information processing method comprising:
determining whether a candidate travelable space satisfies a condition, the candidate travelable space being a candidate space that a user is capable of traveling to in a virtual space; and
controlling, according to a result of the determining of whether the candidate travelable space satisfies the condition, whether to present the candidate travelable space in the virtual space.

2. The information processing method according to claim 1, wherein
whether the candidate travelable space satisfies the condition is determined using a virtual attribute of the user in the virtual space.

3. The information processing method according to claim 2, wherein
the virtual attribute of the user is a virtual age of the user.

4. The information processing method according to claim 1, wherein
whether the candidate travelable space satisfies the condition is determined using a real attribute of the user in a real world.

5. The information processing method according to claim 4, wherein
the real attribute of the user is a real age of the user.

6. The information processing method according to claim 1, wherein
one attribute is selected from either a virtual attribute of the user in the virtual space or a real attribute of the user in a real world, and
whether the candidate travelable space satisfies the condition is determined using the one attribute selected.

7. The information processing method according to any one of claims 1 to 6, wherein
whether the candidate travelable space satisfies the condition is determined and whether to present the candidate travelable space is controlled per multi-user unit consisting of a plurality of users including the user.

8. The information processing method according to any one of claims 1 to 6, wherein
candidate travelable space information to which condition information has been added is obtained, the candidate travelable space information indicating the candidate travelable space, the condition information indicating the condition, and
whether the candidate travelable space satisfies the condition is determined according to the condition information added to the candidate travelable space information.

9. An information processing method comprising:
determining whether a candidate three-dimensional object satisfies a condition, the candidate three-dimensional object being a candidate three-dimensional object to be presented to a user in a virtual space; and
controlling, according to a result of the determining of whether the candidate three-dimensional object satisfies the condition, whether to present the candidate three-dimensional object in the virtual space.

10. The information processing method according to claim 9, wherein
whether the candidate three-dimensional object satisfies the condition is determined using a virtual attribute of the user in the virtual space.

11. The information processing method according to claim 10, wherein
the virtual attribute of the user is a virtual age of the user.

12. The information processing method according to claim 9, wherein
whether the candidate three-dimensional object satisfies the condition is determined using a real attribute of the user in a real world.

13. The information processing method according to claim 12, wherein
the real attribute of the user is a real age of the user.

14. The information processing method according to claim 9, wherein
one attribute is selected from either a virtual attribute of the user in the virtual space or a real attribute of the user in a real world, and
whether the candidate three-dimensional object satisfies the condition is determined using the one attribute selected.

15. The information processing method according to any one of claims 9 to 14, wherein
whether the candidate three-dimensional object satisfies the condition is determined and whether to present the candidate three-dimensional object is controlled per multi-user unit consisting of a plurality of users including the user.

16. The information processing method according to any one of claims 9 to 14, wherein
one unit is selected from either a single-user unit consisting of the user or a multi-user unit consisting of a plurality of users including the user, and
whether the candidate three-dimensional object satisfies the condition is determined and whether to present the candidate three-dimensional object is controlled per the one unit selected.

17. The information processing method according to any one of claims 9 to 14, wherein
candidate three-dimensional object information to which condition information has been added is obtained, the candidate three-dimensional object information indicating the candidate three-dimensional object, the condition information indicating the condition, and
whether the candidate three-dimensional object satisfies the condition is determined according to the condition information added to the candidate three-dimensional object information.

18. The information processing method according to any one of claims 9 to 14, wherein
whether to present the candidate three-dimensional object in the virtual space in a first mode is controlled according to the result of the determining,
the candidate three-dimensional object is presented in the virtual space in the first mode, when the candidate three-dimensional object is determined to satisfy the condition, and
the candidate three-dimensional object is presented in the virtual space in a second mode different from the first mode, without presenting the candidate three-dimensional object in the virtual space in the first mode, when the candidate three-dimensional object is determined not to satisfy the condition.

19. An information processing device comprising:
one or more processors; and
one or more memories that are accessible from the one or more processors, wherein
in operation, the one or more processors:
determine whether a candidate travelable space satisfies a condition, the candidate travelable space being a candidate space that a user is capable of traveling to in a virtual space; and
control, according to a result of the determining of whether the candidate travelable space satisfies the condition, whether to present the candidate travelable space in the virtual space.

20. An information processing device comprising:
one or more processors; and
one or more memories that are accessible from the one or more processors, wherein
in operation, the one or more processors:
determine whether a candidate three-dimensional object satisfies a condition, the candidate three-dimensional object being a candidate three-dimensional object to be presented to a user in a virtual space; and
control, according to a result of the determining of whether the candidate three-dimensional object satisfies the condition, whether to present the candidate three-dimensional object in the virtual space.
